(19) Europäisches Patentamt
European Patent Office
Office européen des brevets

(11) **EP 3 910 478 B1**

(12) **EUROPEAN PATENT SPECIFICATION**

(45) Date of publication and mention
of the grant of the patent:
**01.03.2023 Bulletin 2023/09**

(21) Application number: **20217354.8**

(22) Date of filing: **28.12.2020**

(51) International Patent Classification (IPC):
**G06F 11/36** *(2006.01)*

(52) Cooperative Patent Classification (CPC):
**G06F 11/3608**

(54) **METHOD AND SYSTEM FOR CLASSIFICATION AND RANKING OF DELTA ALARMS**

VERFAHREN UND SYSTEM ZUR KLASSIFIZIERUNG UND RANGORDNUNG VON
DELTA-ALARMEN

PROCÉDÉ ET SYSTÈME DE CLASSIFICATION ET DE CLASSEMENT D'ALARMES DELTA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2020 IN 202021020676**

(43) Date of publication of application:
**17.11.2021 Bulletin 2021/46**

(73) Proprietor: **Tata Consultancy Services Limited
Maharashtra (IN)**

(72) Inventor: **Muske, Tukaram Bhagwat
411013 Pune - Maharashtra (IN)**

(74) Representative: **Goddar, Heinz J.
Boehmert & Boehmert
Anwaltspartnerschaft mbB
Pettenkoferstrasse 22
80336 München (DE)**

(56) References cited:
**EP-A1- 3 144 816     US-A1- 2016 182 558**

• **Tukaram Muske ET AL: "Survey of Approaches
for Handling Static Analysis Alarms", , 1 January
2016 (2016-01-01), XP055315249, DOI:
10.1109/SCAM.2016.25 Retrieved from the
Internet:
URL:https://www.win.tue.nl/~aserebre/SCAM2
016.pdf [retrieved on 2016-10-31]**

**Description**

TECHNICAL FIELD

The disclosure herein generally relates to source code analysis, and, more particularly, to a method and system for source code analysis for classification and ranking of delta alarms generated during the source code analysis.

BACKGROUND

Testing is a process of validating and verifying if a software program or application or product meets the expected business and technical requirements. A widely used technique in practice for ensuring software program quality and reliability is static analysis, wherein a software program or application code is analyzed to detect defects without actually executing the program or application code. During static analysis, an application code is analyzed using static analysis tools, wherein the tools generate one or more static analysis alarms along with reporting of safe and error program points in the application code. A static analysis alarm generated by static analysis tools corresponding to a point of interest (POI) may or may not represent a defect, and each of the alarms generated is a warning message to the user notifying the tool user about a potential defect at that program point. The alarms generated are reported to the user by the static analysis tools to decide the safety at the points of interest (POIs) in the application code corresponding to the alarms. The decision about the safety of alarms reported is made by manually inspecting the alarms and the code associated with the alarms. Such manual inspection of alarms is found to be very costly, tedious, and error-prone.

Typically, each software program, and in turn code of the software program undergoes changes/updates to accommodate new requirements and fixing of defects. Such a code change may involve addition of some new lines of code, changes to one or more of existing lines, and/or deletion of one or more of the lines. Such code changes between a source code ($V_2$) and a previous version of source code ($V_1$) may or may not affect the alarms generated on V2. Alarms which were generated on $V_2$ and the same alarms were not generated on $V_1$ are termed as 'newly generated'. Alarms which were generated on $V_1$ and the same alarms are also generated on $V_2$ are termed as 'repeated alarms'. In order to reduce number of alarms, delta alarms computation techniques on the alarms generated by static analysis tools have been proposed and used. The delta alarms computation techniques reduce the number of alarms by suppressing a subset of repeated alarms using one or more code analysis techniques including impact analysis, and computation of sufficient/necessary conditions from the previous version of the code $V_1$ and inserting those conditions in the source code $V_1$ to be analyzed. The delta alarms identification techniques compute the repeated alarms to be suppressed by checking whether the code changes between the versions $V_1$ and $V_2$ influence values of the variables in the repeated alarm or the values computed for the alarm's POI. When none of the code change is found to influence values of the variables in the alarm's POI at the alarm's program point or the values computed for the alarm's POI, the repeated alarm is deemed to be suppressible. Repeated alarms that remain after suppressing the repeated alarms, in addition to the newly generated alarms, are known as delta alarms. Such delta alarms are generated due to different reasons. During the code analysis, delta alarms reported by the existing delta alarms computation techniques are of the same priority, and the existing delta alarms computation techniques as well as other alarms postprocessing techniques do not use the code changes due to which the delta alarms are generated to improve the reporting of the delta alarms. As a result, a user of the system may be required to do manual analysis to determine the causes for generation of delta alarms by manually inspecting the delta alarms. Moreover, the number of delta alarms generated is very large, and the existing systems which identify alarms that are most likely to be errors, miss to take into account the causes of delta alarms. With increasing length and complexity of the delta alarms, such a manual inspection and assessment becomes a complicated and time and effort consuming task, because the user is required to manually inspect each of the delta alarms.

Tukaram Muske et al.: "Survey of Approaches for Handling Static Analysis Alarms", states that static analysis tools have showcased their importance and usefulness in automated detection of code anomalies and defects. However, the large number of alarms reported and cost incurred in their manual inspections have been the major concerns with the usage of static analysis tools. Existing studies addressing these concerns differ greatly in their approaches to handle the alarms, varying from automatic postprocessing of alarms, supporting the tool-users during manual inspections of the alarms, to designing of light-weight static analysis tools. A comprehensive study of approaches for handling alarms is, however, not found. In this paper, review 79 alarms handling studies collected through a systematic literature search and classify the approaches proposed into seven categories. The literature search is performed by combining the keywords-based database search and snowballing. Review is intended to provide an overview of various alarms handling approaches, their merits and shortcomings, and different techniques used in their implementations. Findings include that the categorized alarms handling approaches are complementary and they can be combined together in different ways. The categorized approaches and techniques employed in them can help the designers and developers of static analysis tools to make informed choices.

EP 3 144 816 A discloses a method and a system for model checker based efficient elimination of false positives from static analysis warnings generated during static analysis of an application code. The system computes complete-range non-deterministic value variables (*cnv* variables) that are based on data flow analysis or static approximation of execution paths by control flow paths. During computation of *cnv* variables, over approximation (*may-cnv* variables) and under approximation (*must-cnv* variables) of a set of *cnv* variables at a program point is identified. The computed *cnv* variables are used to check whether an assertion variable is a *cnv* variable and the corresponding assertion verification call is redundant or otherwise. The identified redundant calls are then skipped for the efficiency of the false positives elimination and the model checker is invoked corresponding to the non-redundant assertion verification calls.

US 2016/0182558 A discloses machine learning that significantly reduces false alarms generated by an automated analysis tool performing static security analysis. Using either user-supplied or system-generated annotation of particular findings, a "hypothesis" is generated about how to classify other static analysis findings. The hypothesis is implemented as a machine learning classifier. To generate the classifier, a set of features are abstracted from a typical witness, and the system compares feature sets against one another to determine a set of weights for the classifier. The initial hypothesis is then validated against a second set of findings, and the classifier is adjusted as necessary based on how close it fits the new data. Once the approach converges on a final classifier, it is used to filter remaining findings in the report.

SUMMARY-

Embodiments of the present disclosure present technological improvements as solutions to one or more of the above-mentioned technical problems recognized by the inventors in conventional systems. The invention is defined in detail in the appended independent claims, whereas preferred embodiments of the invention are defined in the appended dependent claims.

A processor implemented method for code analysis is provided. In this method, during the code analysis, a plurality of input data are received via one or more hardware processors, wherein the plurality of input data include an application's source code ($V_2$) from a plurality of source codes, a previous version of the source code ($V_1$), and results of static analysis on the previous version of the source code ($V_1$). Further, a set of alarms are generated from the source code ($V_2$), based on analysis of the source code ($V_2$) using a static analysis technique, via the one or more hardware processors. Further, a code mapping is constructed using the source code ($V_2$) and the previous version of the source code ($V_1$), based on a code mapping technique where the technique maps the elements of the source code $V_1$ to the elements of source code $V_2$, via the one or more hardware processors, and further, a set of delta alarms are computed from amongst the set of alarms, using a delta alarms identification technique, based on the code mapping and the results of static analysis on the previous version of the source code (V1), via the one or more hardware processors. Computing the set of delta alarms includes computing a set of newly generated alarms wherein each of the newly generated alarms is generated at line $l_2$ in the source code ($V_2$) without having a similar alarm generated at line $l_1$ in the previous version of the source code ($V_1$) where $l_1$ maps to $l_2$ in the constructed code mapping. That is, each of the newly generated alarm is generated for the first time in $V_2$. Computing the delta alarms further involves computing a set of repeated alarms wherein each of the repeated alarms repeats across the source code ($V_2$) and the previous version of the source code ($V_1$). An alarm generated at line $l_2$ in the source code $V_2$ is said to be repeated alarm only if a similar alarm was generated at line $l_1$ in the previous version of the source code $V_1$, and line $l_1$ maps to the line $l_2$ in the constructed code mapping.. Further, a set of impacting code changes (also called "impacting changes") from the code changes made between the source code (V2) and the previous version of the source code (V1) are computed for each of the repeated alarms, using an impact analysis technique. Further, a set of impacted alarms from amongst the repeated alarms are determined, wherein each of the repeated alarms is determined as impacted alarm if the repeated alarm has one or more impacting code changes. The set of delta alarms is constructed using the set of newly generated alarms and the set of impacted alarms. Further, the delta alarms in the set of delta alarms are classified, by classifying each of the newly generated alarms and impacted alarms via the one or more hardware processors. The process of classification of alarms involves classifying each of the newly generated alarms as one of a result-changed alarm, a POI-added alarm, and a POI-changed alarm, based on at least one of (a) change to the POI of each of the newly generated alarms and, (b) result of the static analysis for the POI of each of the newly generated alarms; and classifying each of the impacted delta alarms as one of (a) data-dependency impacted alarm, (b) value-dependency impacted alarm, and (c) control-dependency impacted alarm, based on type of the impacting code changes computed for the impacted delta alarm. Further, the delta alarms are ranked by assigning different priorities to each of the classes identified for each of the newly generated alarms and the impacted alarms, via the one or more hardware processors. Further, the delta alarms are reported to a user, wherein reporting the ranked delta alarms involves grouping all impacted alarms belonging to same class and having the same set of impacting code changes, and reporting each of the impacted alarms along with the impacting code changes computed for it.

In another aspect, a system for code analysis is provided. The system includes one or more hardware processors, a communication interface, and a memory storing a plurality of instructions. The plurality of instructions when executed cause the one or more hardware processors to receive a plurality of input data, wherein the plurality of input data include an application's source code ($V_2$) from a plurality of source codes, a previous version of the source code ($V_1$), and results of static analysis on the previous version of the source code ($V_1$). Further, the system generates a set of alarms from the source code ($V_2$), based on analysis of the source code ($V_2$) using a static analysis technique, via the one or more hardware processors. Further, the system constructs a code mapping using the source code ($V_2$) and the previous version of the source code ($V_1$), based on a code mapping technique where the code mapping technique maps the elements of the source code $V_1$ to the elements of source code $V_2$, via the one or more hardware processors, and further, a set of delta alarms are computed from amongst the set of alarms, using a delta alarms identification technique, based on the code mapping and the results of static analysis on the previous version of the source code (V1), via the one or more hardware processors. The system then computes the set of delta alarms. Computation of the set of delta alarms by the system includes computing a set of newly generated alarms wherein each of the newly generated alarms is generated at line $l_2$ in the source code ($V_2$) without having a similar alarm generated at line $l_1$ in the previous version of the source code ($V_1$) where $l_1$ maps to $l_2$ in the constructed code mapping. That is, each of the newly generated alarm is generated for the first time in $V_2$. Computing the delta alarms further involves computing a set of repeated alarms wherein each of the repeated alarms repeats across the source code ($V_2$) and the previous version of the source code ($V_1$). An alarm generated at line $l_2$ in the source code $V_2$ is said to be repeated alarm only if a similar alarm was generated at line $l_1$ in the previous version of the source code $V_1$, and line $l_1$ maps to the line $l_2$ in the constructed code mapping.. Further, the system computes a set of impacting code changes from the code changes made between the source code (V2) and the previous version of the source code (V1), for each of the repeated alarms, using an impact analysis technique. Further, a set of impacted alarms from amongst the repeated alarms are determined by the system, wherein each of the repeated alarms is determined as impacted alarm if the repeated alarm has one or more impacting code changes. The set of delta alarms is constructed using the newly generated alarms and the impacted alarms. Further, the system classifies the delta alarms in the set of delta alarms, by classifying each of the newly generated alarms and impacted alarms via the one or more hardware processors. The process of classification of alarms involves classifying each of the newly generated alarms as one of a result-changed alarm, a POI-added alarm, and a POI-changed alarm, based on at least one of (a) change to the POI of each of the newly generated alarms and, (b) result of the static analysis for the POI of each of the newly generated alarms; and classifying each of the impacted delta alarms as one of (a) data-dependency impacted alarm, (b) value-dependency impacted alarm, and (c) control-dependency impacted alarm, based on type of the impacting code changes computed for the impacted delta alarm. Further, the system ranks the delta alarms by assigning different priorities to each of the classes identified for each of the newly generated alarms and the impacted alarms, via the one or more hardware processors. Further, the delta alarms are reported to a user, wherein reporting the ranked delta alarms involves grouping all impacted alarms belonging to same class and having the same set of impacting code changes, and reporting each of the impacted alarms along with the impacting code changes computed for it.

In yet another aspect, a non-transitory computer readable medium for code analysis is provided. The non-transitory computer readable medium is comprised of the plurality of instructions stored in the memory, and when executed, performs the following steps using the one or more hardware processors to perform the code analysis. In this method, during the code analysis, a plurality of input data are received via one or more hardware processors, wherein the plurality of input data include an application's source code ($V_2$) from a plurality of source codes, a previous version of the source code ($V_1$), and results of static analysis on the previous version of the source code ($V_1$). Further, a set of alarms are generated from the source code ($V_2$), based on analysis of the source code ($V_2$) using a static analysis technique, via the one or more hardware processors. Further, a code mapping is constructed using the source code ($V_2$) and the previous version of the source code ($V_1$), based on a code mapping technique where the technique maps the elements of the source code $V_1$ to the elements of source code $V_2$, via the one or more hardware processors, and further, a set of delta alarms are computed from amongst the set of alarms, using a delta alarms identification technique, based on the code mapping and the results of static analysis on the previous version of the source code (V1), via the one or more hardware processors. Computing the set of delta alarms includes computing a set of newly generated alarms wherein each of the newly generated alarms is generated at line $l_2$ in the source code ($V_2$) without having a similar alarm generated at line $l_1$ in the previous version of the source code ($V_1$) where $l_1$ maps to $l_2$ in the constructed code mapping. That is, each of the newly generated alarm is generated for the first time in $V_2$. Computing the delta alarms further involves computing a set of repeated alarms wherein each of the repeated alarms repeats across the source code ($V_2$) and the previous version of the source code ($V_1$). An alarm generated at line $l_2$ in the source code $V_2$ is said to be repeated alarm only if a similar alarm was generated at line $l_1$ in the previous version of the source code $V_1$, and line $l_1$ maps to the line $l_2$ in the constructed code mapping.. Further, a set of impacting code changes from the code changes made between the source code (V2) and the previous version of the source code (V1) are computed for each of the repeated alarms, using an impact analysis technique. Further, a set of impacted alarms from amongst the repeated alarms are determined, wherein each of the repeated alarms is determined as impacted alarm if the repeated alarm has one or more impacting code changes. The set of delta alarms is constructed using the newly generated alarms and the impacted alarms. Further, the delta alarms in the set of delta alarms are classified, by classifying each of the newly generated alarms and impacted alarms via the one or more hardware processors. The process of classification of alarms involves classifying each of the newly generated alarms as one of a result-changed alarm, a POI-added alarm, and a POI-changed alarm, based on at least one of (a) change to the POI of each of the newly generated alarms and, (b) result of the static analysis for the POI of each of the newly generated alarms; and classifying each of the impacted delta alarms as one of (a) data-dependency impacted alarm, (b) value-dependency impacted alarm, and (c) control-dependency impacted alarm, based on type of the impacting code changes computed for the impacted delta alarm. Further, the delta alarms are ranked by assigning different priorities to each of the classes identified for each of the newly generated alarms and the impacted alarms, via the one or more hardware processors. Further, the delta alarms are reported to a user, wherein reporting the ranked delta alarms involves grouping all impacted alarms belonging to same class and having the same set of impacting code changes, and reporting each of the impacted alarms along with the impacting code changes computed for it.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for code analysis, according to an embodiment of the present disclosure.
FIG. 2 depicts an example implementation of the system of FIG. 1, and data flow between various system components, according to an embodiment of the present disclosure.
FIG. 3 is a flow diagram depicting steps involved in the process of code analysis being performed by the system of FIG. 1, in accordance with an embodiment of the present disclosure.
FIG. 4 is a flow diagram depicting steps involved in the process of constructing code mapping between a previous version of the source code ($V_1$) and a source code ($V_2$), by the system of FIG. 1, in accordance with an embodiment of the present disclosure.
FIGS. 5A and 5B depict classification of newly generated alarms and impacted alarms, using the system of FIG. 1, according to an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.. It is intended that the following detailed description be considered as exemplary only, with the true scope being indicated by the following claims.

Terms and Notations:

a) Control Flow Graph (CFG)

CFG of a program is a directed graph ($\aleph$, $\varepsilon$), where $\aleph$ is a set of nodes representing program statements (e.g., assignments and conditional statements), and $\varepsilon$ is a set of edges such that an edge $\langle n, n'\rangle$ represents a possible flow of program control from $n \in \aleph$ to $n' \in \aleph$ without any intervening node. $n \rightarrow n'$ denotes an edge from node $n$ to node $n'$. Depending on whether the program control flows conditionally or unconditionally along an edge, the edge is labeled either as conditional or unconditional. A CFG has two distinguished nodes *Start* and *End,* representing the *entry* and *exit* of the corresponding program, respectively. Except for the *Start* and *End* nodes, it is assumed that there is a one-to-one correspondence between the CFG nodes and their corresponding program statements. Thus, the terms 'statement' and 'node' are used interchangeably. Henceforth, in code examples $n_m$ denotes the node of a program statement at line *m.* Also, note that terms "code" and "source code" are used interchangeably. Hence "code analysis" and "source code analysis" refer to the same process.

b) Data dependencies

Let $d_x : x = y$ be a definition of *x* at program point $d_x$. $d_x$ is reaching definition of *x* at a program point *p* if there exists a path from entry point of the program to *p* such that $d_x$ is on this path and *x* is not redefined between $d_x$ and *p*. A variable *v* at a program point *p* is considered as data dependent on definition *d* of *v*, if *d* if reaching definition of *v* at *p*. Data dependencies of a variable are definitions on which the variable is data dependent. For a reaching definition *d* of *v*, *assignExpr(d)* is used to denote an assignment expression at *d*: the expression at *d* having an assignment to *v*. The data dependencies of an assignment expression e are said to be same as union of data dependencies of variables in right hand side (RHS) of *e*. For other type of expression *e'* (non-assignment expression), data dependencies of *e'* are same as union of data dependencies of variables in *e'*.

c) Control dependencies

A node *u* post-dominates a node *v* if every path passing through *v* also passes through *u*. A node *w* is said to be control dependent on a conditional edge $u \rightarrow v$ if *w* post-dominates *v*; and if $w \neq u$ *w* does not post-dominateu. Control dependencies of a node *n* are the conditional edges on which *n* is control dependent. A conditional edge *e* is called as a transitive control dependency of a point *p* if *e* belongs to the transitive closure of control dependencies of *p*. For a given control dependency $u \rightarrow v$, *label*$(u \rightarrow v)$ is used to denote it's label, and *condExpr*$(u \rightarrow v)$ andis used to denote the conditional expression associated with the branching node *u*. When a conditional edge $u \rightarrow v$ is from a switch statement to one of its case statements, we assume that the label of that edge is same as the case label. Control dependencies of an expression *e* are same as the control dependencies of the node corresponding to *e*. For a data dependency $d_x$: *x = expr*, data dependencies of $d_x$ are same as the data dependencies of *expr*. For a control dependency *e*, data dependencies of *e* are same as the data dependencies of *condExpr(e)*. Control dependencies of a data dependency $d_x$ : *x = expr* (resp. a control dependency $u \rightarrow v$) are same as the control dependencies of node corresponding to $d_x$ (resp. node u).

Let $\alpha$ be a variable/expression at a program point *p*, or a data/control dependency. The notation $d_\alpha \xrightarrow{d} \alpha$ (resp. $e_\alpha \xrightarrow{c} \alpha$ ) is used to denote $d_\alpha$ is a data dependency of $\alpha$ (resp. $e_\alpha$ is a control deppendcy of $\alpha$). A data dependency *d* is a transitive data dependency of $\alpha$ if $d_1 \xrightarrow{d} d_2 \xrightarrow{d} d_3 \xrightarrow{d} ... \xrightarrow{d} d_k$ , where $d_1 = d$, $d_k = \alpha$, $d_i \xrightarrow{d} d_{i+1}$ , and k>=2.

The notation $d \xrightarrow{d+} \alpha$ is used to denote that *d* is a transitive data dependency of $\alpha$. Let D be the set of all possible data dependencies (definitions of variables) in the program. We call *dDepTransClosure*($\alpha$) is transitive closure of data dependencies of $\alpha$ if and only if *dDepTransClosure*($\alpha$) = $\{ d \mid d \in D, d \xrightarrow{d+} \alpha \}$ . On similar lines, a control dependency *e is* a transitive control dependency of $\alpha$ if $e_1 \xrightarrow{c} e_2 \xrightarrow{c} d_3 \xrightarrow{c} ... \xrightarrow{c} e_k$ , where $e_1 = e$, $e_k = \alpha$, $e_i \xrightarrow{c} e_{i+1}$ , and k>=2.

The notation $cdDep \xrightarrow{cd} \alpha$ is used to denote that *cdDep* is a data or control dependency of $\alpha$. A dependency *cdDep* is a transitive data and control dependency of $\alpha$ (shown as $cdDep \xrightarrow{cd+} \alpha$ ) if $cd_1 \xrightarrow{cd} cd_2 \xrightarrow{cd} cd_3 \xrightarrow{cd} ... \xrightarrow{cd} cd_k$ , where $cd_1$ = *cddep*, $cd_k = \alpha$, $cd_i \xrightarrow{cd} cd_{i+1}$ , and k>=2. Let C be the set of all possible control dependencies (conditional edges) in the program. We call *cdDepTransClosure*($\alpha$) is transitive closure of data and control dependencies of $\alpha$ if and only if

$$cdDepTransClosure(\alpha) = \{ d \mid d \in D, d \xrightarrow{cd+} \alpha \} \cup \{ e \mid e \in C, e \xrightarrow{cd+} \alpha \}$$

d) Program slicing

For a given program and a set of variables at a program point of interest, program slicing techniques compute a reduced program that contains only those statements that are likely to influence the values of the variables at that program point. The reduced program is called a program slice. Depending on the use of program slice, several slicing techniques are used, such as backward slice, and thin slice. Backward slice consists of the program statements which correspond to both data and control dependencies and their transitive dependencies, that is, a backward slice consists of both assignment and conditional statements, whereas thin slice consists of the statements that correspond only to data dependencies and their transitive data dependencies, that is\ a thin slice consists of only assignments statements. A value slice, which is a pruned version of the backward slice and enriched version of the thin slice also is used. A value slice generated for an expression *e*, in addition to the transitive data dependencies of *e*, also consists of the control dependencies that influence the values of variables in *e.* The control dependencies on a value slice are known as value dependencies. A value slice is obtained by eliminating from the backward slice the control dependencies and their transitive dependencies, that only decide whether the program point of *e* is reachable. Therefore, the three slices backward, value, and thin generated for an expression are such that backward slice subsumes value slice, and value slice subsumes thin slice: the size of value slice (resp. thin slice), in terms of the nodes on that slice, is on average about 50% (resp. 25%) of the size of backward slice. The techniques to generate these three slices create a program dependence graph to determine which dependencies are to be retained on the slice and which ones to be removed. A program slice created for *e* is said to be same as the slice created together for the variables in *e* or RHS of *e* if *e* is an assignment expression. A conditional edge $e \xrightarrow{c+} \alpha$ is called a value dependency of $\alpha$ when it is value impacting to $\alpha$ the way it is defined in the notion of value slice.

The notation $e \xrightarrow{v} \alpha$ is used to denote that *e* is a value dependency of $\alpha$. A value dependency *e* is a transitive value dependency of $\alpha$ if $e_1 \xrightarrow{v} e_2 \xrightarrow{v} e_3 \xrightarrow{v} ... \xrightarrow{v} e_k$, where $e_1 = e$, $e_k = \alpha$, $e_i \xrightarrow{v} e_{i+1}$, and k>=2. The notation $e \xrightarrow{v+} \alpha$ is used to denote that *e* is a value dependency of $\alpha$, and the notation $vdDep \xrightarrow{vd} \alpha$ is used to denote that *vdDep* is a data or value dependency of $\alpha$. A conditional edge *vdDep* is a transitive data and value dependency of $\alpha$ (shown as $vdDep \xrightarrow{vd+} \alpha$ ) if $vd_1 \xrightarrow{vd} vd_2 \xrightarrow{vd} vd_3 \xrightarrow{vd} ... \xrightarrow{vd} vd_k$, where $vd_1 = vdDep$, $vd_k = \alpha$, $vd_i \xrightarrow{vd} vd_{i+1}$, and k>=2. *vdDepTransClosure*($\alpha$) is transitive closure of data and value dependencies of *a* if and only if

$$vdDepTransClosure(\alpha) = \{ d \mid d \in D, d \xrightarrow{vd+} \alpha \} \cup \{ e \mid e \in C, e \xrightarrow{vd+} \alpha \}$$

e) Static Analysis Alarms

A static analysis tool checks the program code to determine where in the program code errors like division by zero (DZ) and array index out of bound (AIOB) are likely to occur. $D_n$ and $A_n$ respectively are used to denote an alarm generated at line *n* for these two verification properties. An expression that is checked by a static analysis tool is termed as a point of interest (POI). For example, a POI for check related to DZ and AIOB respectively corresponds to denominator and access of an array with its index. *poi*($\phi$) is used to denote the POI of an alarm $\phi$, and $\phi_{l,V}^{p}$ denotes an alarm reported for a POI of verification property *p*, present at line *l* in version V. A slice generated for an alarm $\phi$ is considered to be same as the slice generated for *poi*($\phi$). *cond*($\phi$) is used to denote alarm condition of an alarm $\phi$, i.e., the check performed by the analysis tool for detecting an error. The alarm condition of an alarm is such that evaluation of the alarm condition to true indicates that the alarm is a false positive, and its evaluation to false indicates the alarm is an error. The alarm condition of an alarm is a logical formula, for example $0 \leq x \leq 11$, which is independent of the program point of the alarm. The alarms $\phi$ and $\phi'$ of the same property are considered to be similar if *cond*($\phi$) $\Leftrightarrow$ *cond* ($\phi'$). An assumption is made that a static analysis tool groups the generated alarms using state-of-the-art clustering techniques, and a delta alarms computation technique computes delta alarms from dominant alarms resulting after the clustering. As a result, no two delta alarms reported for a line are similar.

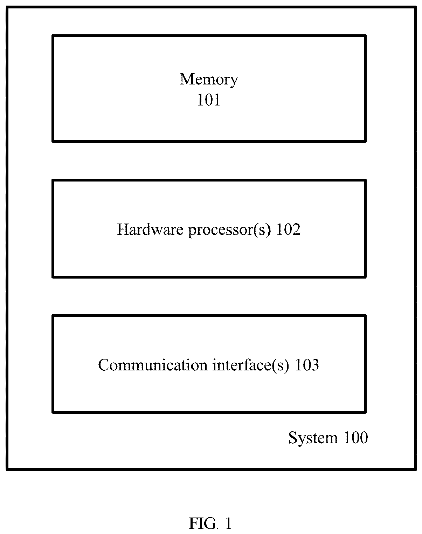

Referring now to the drawings, and more particularly to FIG. 1 through FIG. 5B, where similar reference characters denote corresponding features consistently throughout the figures, there are shown preferred embodiments and these embodiments are described in the context of the following exemplary system and/or method.

FIG. 1 illustrates an exemplary system 100 for code analysis. The system 100 includes one or more hardware processors 102, communication interface(s) or input/output (I/O) interface(s) 103, and one or more data storage devices or memory 101 operatively coupled to the one or more hardware processors 102. The one or more hardware processors 102 can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The communication interface(s) 103 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the communication interface(s) 103 can include one or more ports for connecting a number of devices to one another or to another server.

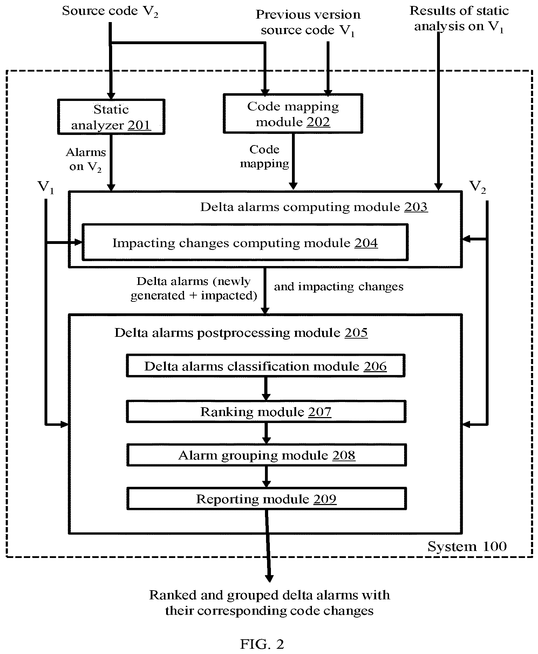

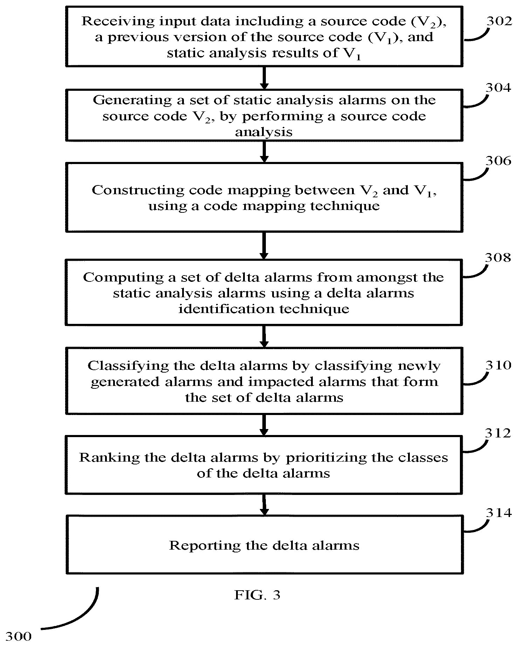

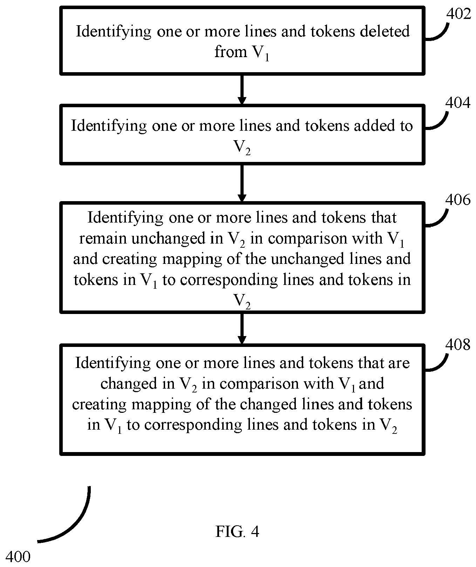

The memory 101 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, one or more components (not shown) of the system 100 can be stored in the memory 101. The memory 101 is configured to store a plurality of operational instructions (or 'instructions') which when executed cause one or more of the hardware processor(s) 102 to perform various actions associated with the code analysis being performed by the system 100. The system 100 can be implemented in a variety of ways as per requirements. An example of such implementation is depicted in FIG. 2. The hardware components depicted in FIG. 2 may be implementation of the hardware processor(s) 102, interchangeably referred to as hardware processors 102. Various steps involved in the process of the code analysis being performed by the system 100 are explained with description of FIG.2 and FIG. 3. All the steps in FIG. 3 and FIG. 4 are explained with reference to the system of FIG. 1 and the system implementation and associated components depicted in FIG. 2.

FIG. 2 depicts an example implementation of the system 100 of FIG. 1, and data flow between various system components for the code analysis. The system implementation in FIG. 2 has the following components: a static analyzer 201, a code mapping module 202, a delta-alarms computing module 203 which includes an impacting changes computing module 204, a delta alarms post processing module 205. The delta alarms post processing module 205 further includes a delta-alarms classification module 206, a ranking module 207, an alarm grouping module 208, and a reporting module 209. In FIG. 1, all the data processing associated with the code analysis being handled by the hardware processor(s) 102 of the system 100. As the system 100 in FIG. 2 is one mode of implementation of the system 100 in FIG. 1, the modules 201 through 209 are implementations of the hardware processor(s) 102. The system 100 collects the source code $V_2$, a previous version of the source code ($V_1$), and static analysis results of $V_1$ (i.e. alarms generated on $V_1$) as inputs for performing the code analysis. Here, $V_1$ and $V_2$ are two different versions of the same source code, wherein $V_1$ is older/previous version, and $V_2$ is newer version in comparison with $V_1$. For explanation purpose, in the claims and the description, the term "source code" refers to $V_2$, and the term "the previous version of the source" refers to $V_1$.

The code analysis is performed by the system 100 to process/analyze a source code ($V_2$) and a previous version of the source code ($V_1$) to determine code changes between $V_1$ and $V_2$, analyze the source code $V_2$ which results in generating a set of static analysis alarms (also referred to as "static alarms" or "alarms"), determine a set of newly generated alarms and a set of repeated alarms from the set of static analysis alarms, determine a set of impacting code changes for each of the repeated alarms, compute a set of impacted alarms from the set of repeated alarms based on the set of determined impacting code changes for each of the repeated alarms, construct a set of delta alarms form the newly generated alarms and impacted alarms, classify the delta alarms into multiple classes by classifying the newly generated alarms based on changes to their Points of Interest (POIs) or analysis results, and classifying the impacted alarms based on the impacting code changes determined for them, rank the classified alarms by prioritizing the classes of delta alarms, and report the ranked delta alarms to the user. $V_2$ is current version of the source code that is to be analyzed for detection of defects using a static analysis tool, and $V_1$ is previous version of the same source code. Sample code for $V_1$ and $V_2$ are given below:

**Version $V_1$**

```
1    int x, y, z, a[50];
2    int arr [10] = {.....};
3
4    void foo (int p) {
5    int m=2, t;
6
7    y = lib2 ();
8    z = lib3 ();
9
10   if (nondet ())
11       m=4;
12   bar (m);
13
14
15   t = x / y;        // D'₁₅
16   }
17
18   Void bar (int i) {
19     int t = 0, t1;
20
21   x = lib1 ();
22     t1 = arr [x];    // A'₂₂
23
24   if (z > 20);
25     t = arr [y];     // A'₂₅
26
27   a[i] = 5;
28
29   print (25 / t) ;   // D'₂₉
30   }
```

**Version $V_2$**

```
1    int x, y, z, a[50];
2    int arr [10] = {.....};
3
4    void foo (int p) {
5    int m=2, t;
6
7    y = lib2 ();
8    z = lib4 ();
9
10   if (nondet ())
11       m=z;
12   bar (m);
13   z = 1000 / p;      //D₁₃ POI-Added
14
15   t = x / (y-2);     // D₁₅ POI-Changed
16   }
17
18   Void bar (int i) {
19     int t = 0, t1;
20
21     x = lib3 ();
22       t1 = arr [x];  // A₂₂ data-
     dependency Impacted
23
24   if (z > 20);
25     t = arr [y];     // A₂₅ control-
     dependency Impacted
26
27   a[i] = 5;  // A₂₇ Result-changed
28
29   print (25 / t) ;   // D₂₉ Value-
     dependency Impacted
30   }
```

As depicted in FIG. 3, the static analyzer 201 receives (302) the source code $V_2$ as input. Results of static analysis of $V_1$, i.e. the static alarms of $V_1$ are received as inputs by the delta alarms computing module 203. By processing $V_2$, the static analyzer 201 generates (304) a set of static alarms for the source code $V_2$. The static analyzer 201 use any known static analysis method/approach for processing $V_2$ to analyze the source code of $V_2$ and generate the static alarms.

The code mapping module 202 receives the source code $V_2$ and the previous version of the source code $V_1$ as inputs. The code mapping module 202, having collected $V_2$ and $V_1$ as inputs, constructs (306) a code mapping for $V_1$ and $V_2$, using any suitable code mapping technique. The constructed mapping is used by the delta alarms computing module 203, and the delta alarms postprocessing module 205. The code mapping constructed by the module 202 consists of a map, denoted as $Map_{V1,V2}$: $lines(V_1) \rightarrow lines$ $(V_2) \cup \{\bot\}$, which maps source code lines in $V_1$ to their corresponding lines in $V_2$, and to $\bot$ if the lines have been deleted from $V_1$. No two lines in $V_1$ map to the same line in $V_2$. A line in $V_1$ is denoted as $l_1$ and a line in $V_2$ is denoted as $l_2$. This map can be used to compute the following:

(a) A line $l_1$ in $V_1$ is deleted if $Map_{V1,V2}(l_1) = \bot$.

(b) A line $l_2$ is added in $V_2$ if there doesn't exist $l_1$ in $V_1$ such that $Map_{v1,v2}(l_1) = l_2$.
(c) A line $l_1$ in $V_1$ (or $l_2$ in $V_2$) is changed if $Map_{v1,v2}(l_1) = l_2$ and code on $l_1$ and $l_2$, excluding white spaces, is different.
(d) A line $l_1$ in $V_1$ (or $l_2$ in $V_2$) is unchanged if $Map_{v1,v2}(l_1) = l_2$ and code on $l_1$ and $l_2$, excluding white spaces, is same.

When $Map_{v1,v2}(l_1) = l_2$ and $l_2 \neq \perp$, $l_1$ and $l_2$ are considered as the corresponding lines. For a changed line $l_1$ in $V_1$ and corresponding line $l_2$ in $V_2$, similar to mapping of lines in $V_1$ to $V_2$, the code mapping module 202 creates mapping of the tokens in $l_1$ to their corresponding tokens in $l_2$. The tokens on a line are identified as the words on that line or can be tokens that are generated during lexing and parsing of the program source code. The created mapping of tokens in $l_1$ to $l_2$ maps every token in $l_1$ to its corresponding token in $l_2$, or to $\perp$ if the token has been deleted from $l_1$. The token mapping also has one to one correspondence, similar to the line mapping, except in tokens in line $l_1$ part of $V_1$ are deleted and tokens in $l_2$ part of $V_2$ are added. The constructed mapping of the tokens of two corresponding lines $l_1$ in $V_1$ and $l_2$ in $V_2$ is a map and it is denoted as $Map_{l1,l2} : tokens\,(l_1) \rightarrow tokens\,(l_2) \cup \{\perp\}$. The constructed mapping of tokens in the corresponding lines $l_1$ and $l_2$ can be used to determine whether a given token in $l_1$ is deleted, changed, or unchanged. The code mapping module uses one or more code mapping techniques like diff utility, and AST-based program differencing to compute the mapping of the lines i.e. $Map_{V1,V2}$ and the mapping of tokens in the changed lines.

The constructed mapping of the lines i.e. $Map_{V1,V2}$ and the mapping of tokens in the corresponding changed lines is used together, by the delta alarms computing module 203 and the delta alarms postprocessing module 205, to compute the following, where an expression is made up of one or more tokens.:

a) An expression $e_1$ on line $l_1$ in $V_1$ is deleted if (1) $l_1$ is deleted from $V_1$, or (2) $l_1$ is changed and every token in $e_1$ is deleted from $l_1$.
b) An expression $e_2$ is added to line $l_2$ in $V_2$ if (1) $l_2$ is added to $V_2$, or (2) $l_2$ is changed and every token in $e_2$ is added to $l_2$.
c) An expression $e_1$ on line $l_1$ in $V_1$ (resp. expression $e_2$ on line $l_2$ in $V_2$) is changed if at least one of the tokens in $e_1$ (resp. $e_2$) is changed.
d) An expression $e_1$ on line $l_1$ in $V_1$ is unchanged if (a) $l_1$ is unchanged, or (b) $l_1$ is changed but none of the tokens in $e_1$ is changed or deleted.
e) An expression $e_2$ on line $l_2$ in $V_2$ is unchanged if (a) $l_2$ is unchanged, or (b) $l_2$ is changed but none of the tokens in $e_2$ is changed or added.

An expression $e_1$ on line $l_1$ in $V_1$ and an expression $e_2$ on line $l_2$ in $V_2$ are considered as corresponding expressions if (1) $l_1$ and $l_2$ are the corresponding lines, and (2) $e_2$ is a changed version of $e_1$ or is same as $e_1$. A tokens-based approach is used to determine if an expression that spans over multiple lines is added, deleted, or changed, by matching its sub expressions appearing on different lines. To avoid identifying semantically equivalent statements like $i = i+1$ and $i++$ as changed, the code mapping module can use code normalization methods to normalize the code. During the code mapping, the code mapping module 202 may also perform mapping of changed/unchanged lines and tokens as well. Steps involved in the process of code mapping are depicted in FIG. 4.

After the code mapping, using a delta alarms identification technique, a set of delta alarms are computed (308) from amongst the static alarms generated at step 304, by the delta alarms computing module 203. Inputs to the delta alarms computing module 203 for computing the delta alarms are the source code ($V_2$), the previous version of the source code ($V_1$), alarms computed for $V_2$, code mapping data from the code mapping module 202, and results of static analysis on $V_1$. The computation of delta alarms from the static analysis alarm can be using one or more delta alarms computation techniques and is in comparison with the alarms generated on the previous version $V_1$. The delta alarms computing module 203 initially classifies the alarms generated on $V_2$ into "newly generated alarms" and "repetitive alarms". The repetitive alarms are the alarms that are generated on both the versions $V_1$ and $V_2$. The newly generated alarms, as the name implies, are the alarms that are not present in $V_1$, but are newly generated in $V_2$. A static analysis alarm $\phi$ generated on $V_2$ is classified as a newly generated alarm if the expression of the POI of the alarm $poi(\phi)$, is newly added in $V_2$, and the expression $e$ in $V_1$ is corresponding expression of the POI of the alarm $poi(\phi)$ and an alarm similar to $\phi$ is not generated for $e$ in $V_1$. For example, the alarm $D_{13}$ in version $V_2$ sample code is a newly generated alarm as a result of addition of a new line i.e. line 13 in $V_2$ in comparison with $V_1$. Similarly, the alarm $D_{15}$ in $V_2$ is another example of the newly generated alarm, however, due to change in POI. Here, 'change in POI', means that the line 13 in $V_1$ has been changed in $V_2$, and as a result of this change, the alarm at line 13 also has changed. A static analysis alarm $\phi$ generated on $V_2$ is classified as a repeated alarm if the expression $e$ in $V_1$ is corresponding expression of the POI of the alarm $poi(\phi)$ and an alarm similar to $\phi$ is generated for $e$ in $V_1$. The similar alarm generated in $V_1$ for a repeated alarm, i.e. the alarm in $V_1$ generated for the expression corresponding to the POI of the alarm in $V_2$, is called corresponding

alarm of the repeated alarm. For example, the alarms $A_{22}$ and $A'_{22}$ in $V_2$ and $V_1$ respectively, are corresponding alarms, as the POI is same for both the alarms and their expressions are corresponding expressions $V_2$ and $V_1$. The delta alarms computing module 203, using the impacting changes computing module 204, performs impact analysis for each of the repeated alarms, to identify the changes which can affect the alarm. The changes affecting the alarm are identified as the changes to the program statements which directly or indirectly influence values taken by the variables in the POI of alarm. If the repetitive alarm does not have any impacting changes, the alarm is deemed to be a false positive and is suppressed by the delta alarms computing module 203. The repeated alarms remaining after the suppression are called "impacted alarms". Examples of impacted alarms are $A_{22}$, $A_{25}$, and $D_{29}$ in $V_2$ of the example code given. Thus, set of delta alarms constructed by the delta alarms computing module 203 consists of the newly generated alarms and the impacted alarms. Examples of the delta alarms in the delta alarm set are $A_{22}$, $A_{25}$, $D_{29}$, $A_{27}$, $D_{15}$ and $D_{13}$. Information on the delta alarms, and their corresponding impacting changes are given as input to the delta alarms post-processing module 205, which post-processes the delta alarms to perform classification and ranking of the delta alarms. The impact analysis performed by the impacting changes computing module 204 varies depending on the delta alarms computation technique, and depending on the technique the impacting changes computed by the impacting changes computing module 204. For example, when the module 204 performs the impact analysis based on transitive data and control dependencies, the impacting changes are computable. However, when the impact analysis by the module 204 is based on identification sufficient and necessary conditions from $V_1$ and inserting those conditions at mapped lines in $V_2$ may not result in computation of the impacting changes for the impacted alarms. In such cases, the impact analysis determines whether a repeated alarm is impacted or not, without explicitly computing the impacting changes. When the impacting changes are computed in the form of data and control dependencies that are modified, they can be used by the delta alarms classification module 206 to classify the impacted alarms into the sub-classes.

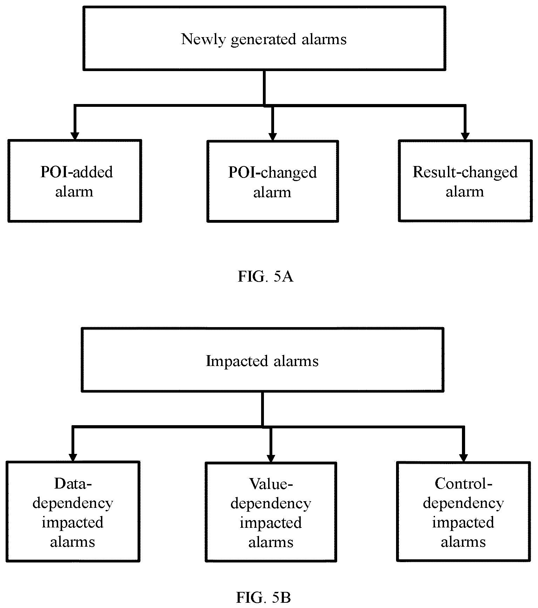

During the post-processing, at step 310, the system 100, using the delta alarms classification module 206, classifies the delta alarms ("newly generated alarms" and "impacted alarms") further into six classes. As the delta alarms are generated due to different reasons (e.g. addition/deletion/changes in POIs of alarms), they need to be treated differently. Hence the classification is based on the code changes due to which each of the delta alarms get generated. The delta alarms classifier 206 classifies the newly generated alarms into the following three sub-classes: result-changed alarms, POI-changed alarms, and POI-added alarms, as depicted in FIG. 5A, and explained below.

1) Result-changed alarm:

The delta alarms classification module 206 classifies a newly generated alarm $\emptyset^p_{l_2,v_2}$ as the result-changed alarm if POI of the alarm is unchanged and no alarm of the property $p$ was reported for the POI's corresponding expression in $V_1$. That is, for the POI of a result-changed alarm, there exits an expression $e$ in $V_1$ such that $e$ and $poi(\emptyset^p_{l_2,v_2})$ are corresponding expressions, and no similar alarm was generated for $e$ in $V_1$. This indicates, the analysis result of the same expression $e$ and $poi(\emptyset^p_{l_2,v_2})$ is changed from 'safe' in $V_1$ to 'alarm' in $V_2$. In the example code, $A_{27}$ is a result-changed alarm, as the expression in $V_1$ corresponding to POI of the alarm is safe. This change in result is due to the change in line 11.

2) POI-changed alarm:

The delta alarms classification module 206 classifies a newly generated alarm $\emptyset^p_{l_2,v_2}$ as a POI-changed alarm if its POI is changed, and an alarm of the property $p$ was reported for the POI's corresponding expression in $V_1$. For example, $D_{15}$ is a POI-changed alarm, as the corresponding POI, $y - 2$, is changed in $V_2$ from $y$ in $V_1$, and an alarm of the same type was reported for the corresponding expression $y$ in $V_1$.

3) POI-added alarms:

The delta alarms classification module 206 classifies a newly generated alarm $\emptyset^p_{l_2,v_2}$ as a POI-added alarm if its POI is added in $V_2$, or its POI is changed and an alarm of the property $p$ was not reported for the POI's corresponding expression in $V_1$. For example, in the example code, $D_{13}$ is a POI-added alarm because the line 13 and therefore $poi(D_{13})$, is newly added in $V_2$.

Furthermore, the delta alarms classification module 206 classifies the impacted alarms into the following three sub-classes: data dependency-impacted alarms, value dependency-impacted alarms, and control dependency-impacted alarms, as depicted in FIG. 5B, and explained below. For the classification of impacted alarms, the delta alarms classification module 206 creates program dependence graphs for each of the impacted alarms on $V_2$ and the alarms corresponding to them in the previous version $V_1$. Then, for POI of the each of the impacted alarm in $V_2$ and the alarms corresponding to them in the previous version $V_1$, it computes transitive closure of data dependencies, transitive closure of the data and control dependencies, and transitive closure of data and value dependencies. For each of the data and control dependencies in the computed transitive closures of the dependencies, the alarms classification module 206 computes whether the dependency is modified during the changes between the two versions. The delta alarms classification module 206 then classifies each of the impacted alarm into one of the three classes using the modified dependencies in the computed transitive closure of the dependencies.

For a given expression e in version V2, let *cdDepTransClosure(e, V)* be the set of transitive closure of data and control dependencies of *e* in *V*. That is, the data and control dependencies in *cdDepTransClosure(e, V)* correspond to the program statements which appear in the backward slice generated for *e*, and vice versa. A dependency of *e* is used to refer to a data or control dependency that appears in the transitive closure of data and control dependencies of *e*. As described below, the delta alarms classification module 206 computes whether a dependency is modified or not during the changes between the two versions. "A data dependency *d* in *cdDepTransClosure($e_1$, $V_1$)* (resp. *cdDepTransClosure($e_2$, $V_2$)* is modified only if *assignExpr(d)* is deleted (resp. added) or changed between V1 and V2. Similarly, a control dependency $\upsilon \rightarrow v$ in *cdDepTransClosure($e_1$, $V_1$)* (resp. *cdDepTransClosure($e_2$, $V_2$))* is modified if *label($\upsilon \rightarrow v$)* is changed, or *condExpr ($\upsilon$)* is deleted (resp. added) or changed". When the impacting changes are computed by the impacting code changes computing module 204 in the form of data and control dependencies, the delta alarms classification module 206 can use the impacting changes to determine whether a dependency in the transitive closure is modified or not by checking if the dependency is part of the impacting code changes. In another case, i.e., when the impacting changes are not computed or the computed impacting changes are not in the form of data and control dependencies, the modified dependencies are computed as described before. Therefore, the impacting code changes and modified dependencies are to be interpreted as the same.

For each repeated alarm $\emptyset^{p}_{l_2,v_2}$, there exists a similar alarm $\emptyset^{p}_{l_1,v_1}$ corresponding to it where $l_1$ and $l_2$ are corresponding lines. The two alarms $\emptyset^{p}_{l_1,v_1}$ and $\emptyset^{p}_{l_2,v_2}$ are called corresponding alarms.

Let $\emptyset^{p}_{l_2,v_2}$ be a repeated alarm of property $p$ generated at line $l_2$ in $V_2$, with alarm $\emptyset^{p}_{l_1,v_1}$ its corresponding alarm in $V_1$, where $\emptyset^{p}_{l_1,v_1}$ is generated for the same property at line $l_1$ in $V_1$. The identification of repeated alarms as an impacted alarm can be described as following based on the modified dependencies in $cdDepTransClosure(poi(\emptyset^{p}_{l_2,v_2}), V_2)$, and $cdDepTransClosure(poi(\emptyset^{p}_{l_1,v_1}), V_1)$. A repeated alarm $\emptyset^{p}_{l_2,v_2}$ with $\emptyset^{p}_{l_1,v_1}$ as its corresponding alarm in $V_1$ is identified as an impacted alarm if at least one of the dependencies in $cdDepTransClosure(poi(\emptyset^{p}_{l_2,v_2}), V_2)$ or $cdDepTransClosure(poi(\emptyset^{p}_{l_1,v_1}), V_1)$ is modified.

Presence of a modified dependency is also checked in $cdDepTransClosure(poi(\emptyset^{p}_{l_1,v_1}), V_1)$, as checking the presence of a modified dependency only in $cdDepTransClosure(poi(\emptyset^{p}_{l_2,v_2}), V_2)$ does not capture deletion of a data dependency from $V_1$. Classification of the impacted alarms by the delta alarms classification module 206 is based on the type of the modified dependencies in the transitive closure of the dependencies computed on both the versions $V_1$ and $V_2$. The classification of the impacted alarms by module 206 is described below:

1) Data-dependency impacted alarms:

For a given expression *e* in version $V_1$, let *dDepTransClosure(e, V)* be the set of transitive closure of data dependencies of *e* in *V*. That is, the transitive data dependencies in *cdDepTransClosure(e, V)* correspond to the program statements which appear in the thin slice generated for *e* in V, and vice versa.. Let $\emptyset^p_{l_2,v_2}$ be an impacted alarm with $\emptyset^p_{l_1,v_1}$ as its corresponding alarm. The delta alarms classification module 206 classifies the impacted alarm $\emptyset^p_{l_2,v_2}$, as a data-dependency impacted alarm, if at least one of the data dependencies in

$$dDepTransClosure(poi(\emptyset^p_{l_1,v_1}), V_1) \quad \text{or} \quad dDepTransClosure(poi(\emptyset^p_{l_2,v_2}), V_2)$$

is modified. In other words, the impacted alarm $\emptyset^p_{l_2,v_2}$ is a data-dependency impacted alarm if the thin slice generated for $\emptyset^p_{l_2,v_2}$ is different from the thin slice generated for the corresponding alarm $\emptyset^p_{l_1,v_1}$. The difference in the thin slices for the two alarms is due to the code changes made between the two versions $V_1$ and $V_2$. That is, an impacted alarm is classified as a data-dependency impacted alarm if at least one of the impacting code changes of the impacted alarm is on at least one program statement that appears on one or more thin slices generated for the impacted alarm and the corresponding alarm in $V_1$. For example, $A_{22}$ in the example code is a data dependency impacted alarm, as the data dependency of variable *x* in $V_2$ at line 21 is modified during the changes between two code versions $V_1$ and $V_2$.

2) Value-dependency impacted alarm:

For a given expression *e* in V, let *vdDepTransClosure(e, V)* be the set of transitive closure of data and value dependencies of *e* in *V*. That is, the transitive data and value dependencies in *vdDepTransClosure(e, V)* correspond to the program statements which appear in the value slice generated for *e* in V, and vice versa. Let $\emptyset^p_{l_2,v_2}$ be an impacted alarm with $\emptyset^p_{l_1,v_1}$ as its corresponding alarm. The alarms classification module 206 classifies the impacted alarm $\emptyset^p_{l_2,v_2}$ as a value-dependency impacted alarm if:

a) there exists a modified dependency in $vdDepTransClosure(poi(\emptyset^p_{l_2,v_2}), V_2)$, but the same modified dependency is not present in $dDepTransClosure(poi(\emptyset^p_{l_2,v_2}), V_2)$; or

b) there exists a modified dependency in $vdDepTransClosure(poi(\emptyset^p_{l_1,v_1}), V_1)$, but the same modified dependency is not present in $dDepTransClosure(poi(\emptyset^p_{l_1,v_1}), V_1)$.

In other words, the impacted alarm $\emptyset^p_{l_2,v_2}$ is a value-dependency impacted alarm if the thin slices generated for it and the corresponding alarm $\emptyset^p_{l_1,v_1}$ are the same, but the value slice generated for $\emptyset^p_{l_2,v_2}$ and $\emptyset^p_{l_1,v_1}$ are different. The difference in the value slices for the two alarms is due to the code changes made between the two versions $V_1$ and $V_2$. That is, an impacted alarm is classified as a value-dependency impacted alarm if the at least one impacting code change of the impacted alarm is on the at least one program statement that appears on one or more value slices generated for the impacted alarm and the corresponding alarm in $V_1$ but not on the one or more thin slices generated for the impacted alarm and the corresponding alarm in $V_1$; In the example code, alarm $D_{29}$ is a value-dependency impacted alarm because, 1) its thin slice is same as the thin slice generated for its corresponding alarm $D'_{29}$, but the value slices generated for the corresponding alarms are different. Value slices of the two alarms are different, because the data dependency *z = lib4()* at line 8, which is present in *vdDepTransClosure(poi ($D_{29}$))* is modified. However, the thin slices are the same as this or any other modified dependency does not appear in *dDepTransClosure(poi ($D_{29}$), $V_2$)* and $dDepTransClosure(poi\ (D'_{29}), V_1)$.

3) <u>Control-dependency impacted alarm</u>

Let $\emptyset^p_{l_2,v_2}$ be an impacted alarm with $\emptyset^p_{l_1,v_1}$ as its corresponding alarm. The alarms classification module 206 classifies the impacted alarm $\emptyset^p_{l_2,v_2}$ as a control-dependency impacted alarm if:

a. there exists a modified dependency in $cdDepTransClosure(poi(\emptyset^p_{l_2,v_2}), V_2)$, but the same modified dependency is not present in $vdDepTransClosure(poi(\emptyset^p_{l_2,v_2}), V_2)$; or

b. there exists a modified dependency in $cdDepTransClosure(poi(\emptyset^p_{l_1,v_1}), V_1)$, but the same modified dependency is not present in $vdDepTransClosure(poi(\emptyset^p_{l_1,v_1}), V_1)$.

In other words, the impacted alarm $\emptyset^p_{l_2,v_2}$ is control-dependency impacted if value slices generated for $\emptyset^p_{l_2,v_2}$ and $\emptyset^p_{l_1,v_1}$ are the same, but their backward slices are different. The difference in the value slices for the two alarms is due to the code changes made between the two versions $V_1$ and $V_2$. That is, an impacted alarm is classified as a control-dependency impacted alarm if the at least one impacting code change of the impacted alarm is on at least one program statement that appears on one or more backward slices generated for the impacted alarm and the corresponding alarm in V1 but not on the one or more value slices generated for the impacted alarm and the corresponding alarm in $V_1$.. In the example code given, alarm $A_{25}$ is a control-dependency impacted alarm as the data dependency *z = liv4()* at line 8, which is present in *cdDepTransClosure(poi($A_{25}$), V2)* is modified. This modified dependency is not present in *vdDepTransClosure(poi($A_{25}$), V2),* and the value slices of the two corresponding alarms $\emptyset^p_{l_2,v_2}$ and $\emptyset^p_{l_1,v_1}$ are same.

The delta alarms classification module 206 can implement optimization to reduce the number of computations required for determining modified dependencies of the alarms. Since *dDepTransClosure(e,V)* is subset of *vdDepTransClosure(e, V),* and *vdDepTransClosure(e, V)* is subset of *cdDepTransClosure(e, V),* the delta alarms classification module 206 uses tabling or memoization to store the results of computing modified dependencies and reuse them later when required during classifying next impacted alarms. Further, alternatively, the delta alarms classification module 206 can perform annotation of the PDG to mark the dependencies that are modified, and performs the required check for any of the dependencies in *dDeptransClosure(e, V), dDepTransClosure(e, V),* or *dDepTransClosure(e, V)* by traversing over the annotated PDG. The traversal over the annotated PDG varies based on the three types of the set corresponding to the transitive closure of the data, control, and value dependencies. Furthermore, as an alternative to implement the classification technique, the delta alarms classification module 206 can implement an approach where the different types of the slices are generated, and later the slices are checked to determine whether they are same or not, and depending on the results of the checks, the alarms are classified.

After classifying each of the alarms as belonging to one of the 6 classes, the system 100 further performs ranking of the delta alarms (312), using the ranking module 207. Ranking of the delta alarms is done by prioritizing the class of each of the newly generated alarms and the impacted alarms. The following observations are made so as to rank the delta alarms:

a) For the newly generated alarms:

Each alarm that repeats in $V_2$ when the alarm is not impacted by the changes between $V_1$ and $V_2$ is suppressed. Thus, if a newly generated delta alarm is suppressed, the alarm remains suppressed on the subsequent versions, unless a code change between the next two subsequent versions impacts the alarm. That is, the newly generated alarms are reported for the POIs that are either added or changed as part of the changes between the two versions $V_1$ and $V_2$.

Thus, these alarms are directly related to the changes as opposed to impacted alarms which get indirectly generated due to changes in their transitive data and control dependencies.

b) For the impacted alarms:

The changes made between $V_1$ and $V_2$ generally correspond to fixing of bugs, addition of features, and refactoring. Failure to detect refactorings can result in generation of *false* impacted alarms. Moreover, determining whether a change (made to fix a bug or add a feature) impacts an expression is undecidable in general. Hence usually a conservative impact analysis approach that is based on data and control dependencies is used. As a result, very often an expression gets (falsely) identified as impacted, and in turn a large number of *false* impacted alarms are generated.

Based on the observations above, the newly generated alarms are prioritized over impacted alarms. Ranking of the alarms in the newly generated and impacted alarm classes, obtained by prioritizing their sub-classes, is explained below:

1. Ranking of Newly Generated Alarms

The newly generated alarms are ranked by assigning different priorities to the their sub-classes. The prioritized sub-classes are *Result-changed > POI-added > POI-changed.* This prioritization is based on the following observations. For a result-changed alarm, its corresponding POI in $V_1$ is reported as safe however the same POI is an alarm in $V_2$. The change in the analysis result is more likely to be due to the side-effect of code changes and it is considered that such alarms are to be inspected on priority.

The POI-added alarms are prioritized over the POI-changed alarms, because POIs of the POI-added alarms are newly added in the code whereas POIs of POI-changed alarms are changed from POIs existing in $V_1$, and the newly generated alarms whose POIs are added are given higher priority than the alarms whose POIs existed in the previous version.

It is to be noted that the ranking in the aforementioned order, based on the stated observations. The system 100 may be configured to perform the ranking in any different order, as per requirements.

2. Prioritization of Classes of Impacted Alarms

The prioritization of the impacted alarms is performed based on three comparable slices:- thin, value, and backward slices. It has been observed in state of the art approaches that using the thin slice instead of the backward slice affects to 29% of the alarms. That is, removing the transitive control dependencies from backward slice affected 29% of the alarms: the alarms got changed from false positives to errors. For the other 71% alarms, the removal of the dependencies did not affect the alarms. Therefore, for a majority of alarms, their transitive control dependencies do not affect the alarms (and in such cases only the transitive data dependencies affect the alarms). Moreover, in the cases where the transitive control dependencies affect alarms, the transitive data dependencies also affect the alarms. As a consequence of this, the following observation has been made:

A change made to an impacted alarm's transitive data dependency is more likely to impact the alarm, compared to a change that directly or indirectly impacts the alarm's transitive control dependency. Since data-dependency impacted alarms are generated due to a change in at least one of their transitive data dependencies, compared to the other alarms the data-dependency impacted alarms are more likely to get impacted by the corresponding impacting code changes.

It has been also observed in prior references that using the value slice instead of the backward slice affects only 2% of the alarms. That is, removing the control dependencies from backward slice, that are not value dependencies, affects only 2% of the alarms, and adding the value dependencies of the alarms to their thin slices reduced the affected alarms from 29% to 2%. Therefore, for most of the alarms, their control dependencies that are not value dependencies are *not relevant,* whereas the value dependencies often are actually relevant to the alarms. As a result, when a change directly or indirectly impacts an impacted alarm's value dependency, the change is more likely to impact the alarm, compared to the change that directly or indirectly impacts the alarm's control dependency that is not a value dependency. The value-dependency impacted alarms are generated due to changes of the former type, whereas control-dependency impacted alarms are generated due to changes of the latter type. Thus, compared to value-dependency impacted alarms, control-dependency impacted alarms are less likely to get impacted by the corresponding code changes, i.e., they are more likely to be false positives.

In light of the aforementioned observations, the system 100 is configured to perform the prioritization of the sub-classes of the impacted alarms in the order *Data-dependency impacted > Value-dependency impacted > Control-dependency impacted.*

The ranking of delta alarms is based on the following prioritization of the classes identified for the delta alarms. *Result-changed > POI-added > POI-changed > Data-dependency impacted > Value-dependency impacted > Control-*

*dependency impacted.* The alarms in the class ranked lower are less likely to be errors than alarms in the class ranked higher, and therefore the alarms in the classes ranked lower can be suppressed when the resources (time) available to manually inspect the delta alarms are limited. Furthermore, the system 100 is configured to rank the alarms in each of the classes using other ranking techniques known in the prior art. It is to be noted that the prioritization in the aforementioned order, based on the stated observations, and a different order may be selected and used as per requirements. The system 100 may be configured to perform the prioritization in any different order, as per requirements.

3. Grouping of Same-class Alarms:

The system 100 is further configured to perform grouping of the alarms, using the alarm grouping module 208, during which impacted alarms which are generated due to the same modified dependencies, that is the impacting changes, are grouped by the system 100, and are reported in such a way that user of the system 100 can inspect the grouped alarms together as they are generated due to the same reason(s). Further, the system 100 reports each of the impacted alarms with its impacting changes i.e., the modified dependencies, using the reporting module 209.

EVALUATION RESULTS:

The disclosed method and system to classify and rank delta alarms was evaluated by implementing the delta alarms classification and ranking techniques.

i. Experimental Setup:

The techniques were implemented using a known TCS's proprietary static analysis tool and framework. In the setup, *impact analysis-based VSAT* was used to compute the set of delta alarms, wherein *diff* was used to create the mapping of the code from two subsequent versions ($V_1$ and $V_2$). The code mapping was used as the input for delta alarms classification technique used. The analysis framework was used to create PDGs of the programs and compute the modified data and control dependencies of the delta alarms.

ii. Selection of applications and Alarms:

The evaluation required analyzing multiple versions of an application. Hence, seven open source C applications were randomly selected with the constraints that at least two versions of the application should be available online. Table 1 lists these applications, together with the total number of versions selected, and the first and last versions selected. These total 59 versions were analyzed for AIOB verification property. The analysis of the application versions selected, the computation of delta alarms, and the described classification and ranking of the delta alarms was performed. For each application, Table 1 summarizes the total number of tool-generated alarms (column *TCSECA alarms*), and *delta alarms* generated on its selected versions except the first version, i.e., the number delta alarms generated on $V_2$ (compared to $V_1$) + number of alarms generated on $V_3$ (compared to $V_2$) and so on. The alarms generated on the first version are not a part of this table, because analysis of this version was not version-aware: no previous version is available to suppress alarms generated on this version.

**Table. 1**

| Applicati on | Versions selected | | | TCS ECA Alar ms | Delta alar ms | Newly generated alarms | | | | Impacted alarms | | | |
|---|---|---|---|---|---|---|---|---|---|---|---|---|---|
| | To tal | $V_1$ | $V_2$ | | | R C | PA | P C | Tot al | DD | VD | CD | Total |
| archimedi s | 15 | 0.0.8 | 2.0.0 | 6373 | 4183 | 0 | 328 | 15 | 343 | 215 | 578 | 3047 | 3840 |
| auto-apt | 3 | 0.3.22 | 0.3.23 | 178 | 174 | 0 | 0 | 0 | 0 | 0 | 84 | 90 | 174 |
| dict-gcide | 2 | 0.48.1 | 0.48.2 | 192 | 16 | 0 | 5 | 0 | 5 | 0 | 7 | 4 | 11 |
| gzip | 9 | 1.3.9 | 1.9 | 1514 | 1446 | 0 | 223 | 1 | 224 | 59 | 1118 | 45 | 1222 |
| mtr | 12 | 0.73 | 0.85 | 803 | 400 | 0 | 28 | 0 | 28 | 12 | 200 | 160 | 372 |
| rhash | 15 | 1.2.4 | 1.3.7 | 245 | 207 | 0 | 17 | 0 | 17 | 13 | 64 | 113 | 190 |
| smp-utils | 3 | 0.96 | 0.98 | 484 | 484 | 0 | 255 | 0 | 255 | 0 | 2 | 227 | 229 |
| Grand Total | | | | 9789 | 6910 | 0 | 856 | 16 | 872 | 299 | 2053 | 3686 | 6038 |
| RC= Result-Changed, PA= POI-Added, PC= POI-Changed, DD= Data-dependency Impacted, VD = Value-dependency impacted, CD = Control-dependency impacted Experimental Results | | | | | | | | | | | | | |

Delta alarms were generated and classified using the system 100. Table 1 presents the number of alarms that belonged to each of the six classes. The following observations were made, by inspecting the values in the table:

- Around 70% of the tool-generated alarms get reported as delta alarms; the remaining alarms are suppressed by the VSAT.
- The impacted alarms dominate the newly generated alarms: around 87% delta alarms are impacted while the remaining 13% are newly generated.
- Majority (98%) of the newly generated alarms belong to POI-added class, whereas six out of the eight applications had no POI-changed alarms at all.
- Among the impacted alarms, only 5% are data dependency impacted alarms: only a small fraction of impacted alarms are generated due to changes in their transitive data dependencies.
- Among the impacted alarms, 34%, and 61% respectively are value dependency impacted and control dependency impacted alarms.

In the ranking scheme covered in the specification, result-changed alarms were assigned the highest priority. In the evaluation, no newly generated alarm is a result-changed alarm. A possible reason to this could be that these applications are well tested or actually no such error existed in these applications. Since the control dependency impacted alarms are most likely to be false impacted alarms, they are suppressed. Thus, overall, the ranking of delta alarms identifies around 61% of the delta alarms (3686 out of 6038) as less likely to be errors than others, and these alarms can be suppressed when the resources (time) available to manually inspect the delta alarms are limited.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of static analysis alarms generated during code analysis. The embodiments, thus provide a method and system for classification and ranking of delta alarms generated on a code. Moreover, the embodiments herein further provides a method and systems for grouping delta alarms based on causes for their generation and reporting the delta alarms to a user along with the causes for their generation.

It is to be understood that the disclosure is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300) for code analysis, comprising:

    receiving (302), via one or more hardware processors (102), a plurality of input data, wherein the plurality of input data comprises a source code ($V_2$) from a plurality of source codes, a previous version of source code ($V_1$), and static analysis results of the previous version of the source code ($V_1$);

    generating (304) a set of static analysis alarms from the source code ($V_2$), based on analysis of the source code ($V_2$) using a static analysis technique, via the one or more hardware processors;

    constructing (306) a code mapping based on the source code ($V_2$) and the previous version of the source code ($V_1$), using a code mapping technique, via the one or more hardware processors;

    computing (308) a set of delta alarms from amongst the static analysis alarms, using a delta alarms identification technique, based on the code mapping and the results of the static analysis on the previous version of the source code ($V_1$), via the one or more hardware processors, wherein the computing of the set of delta alarms comprises:

    computing a set of newly generated alarms from the set of static analysis alarms, wherein each newly generated alarm in the set of static analysis alarms does not have a similar alarm corresponding to it in the previous version of the source code ($V_1$);

    computing a set of repeated alarms from the set of static analysis alarms, wherein each repeated alarm in the set of repeated alarms has a similar alarm corresponding to it in the previous version of the source code ($V_1$);

    computing a set of impacted alarms from amongst the repeated alarms in the set of repeated alarms, wherein an impact analysis technique is used to determine whether each of the repeated alarms is impacted by the code changes made between the source code ($V_2$) and the previous version of the source code ($V_1$); and

    constructing the set of delta alarms using the newly generated alarms and the impacted alarms;

    classifying (310) a plurality of delta alarms in the set of delta alarms, by classifying each of the newly generated alarms and impacted alarms via the one or more hardware processors, comprising:

    classifying each of the newly generated alarms as one of a result-changed alarm, a Point of Interest (POI)-added alarm, and a POI-changed alarm, based on at least one of (a) change to the POI of each of the newly generated alarms and, (b) result of the static analysis for the POI of each of the newly generated alarms; and

    classifying each of the impacted delta alarms as one of (a) data-dependency impacted alarm, (b) value-dependency impacted alarm, and (c) control-dependency impacted alarm, based on type of the impacting code changes of each of the impacted delta alarms;

    ranking (312) the delta alarms by prioritizing class of each of the newly generated alarms and the impacted alarms, via the one or more hardware processors; and

    reporting (314) the delta alarms, wherein reporting the delta alarms comprises grouping all impacted alarms belonging to same class and having the same set of impacting code changes, and reported along with the impacting code changes.

2. The method (300) as claimed in claim 1, wherein the step of constructing the code mapping based on the mapping technique further comprises:

identifying (402) one or more lines and the tokens deleted from the previous version of the source code ($V_1$);
identifying (404) one or more lines and the tokens added to the source code ($V_2$);
identifying (406) one or more lines and the tokens that remain unchanged in the source code ($V_2$) and the previous version of the source code ($V_1$), and creating mapping of the identified lines, and tokens; and
identifying (408) one or more lines and tokens that are changed, from the source code ($V_2$) and the previous version of the source code ($V_1$), and creating mapping of the identified lines and tokens.

3. The method (300) as claimed in claim 1, wherein identification of the similar alarm in $V_1$ corresponding to a static analysis alarm generated on $V_2$ is based on whether the POI of the static analysis alarm is present on the correspondingly mapped line in $V_1$ and a similar alarm was generated for the same POI in $V_1$.

4. The method (300) as claimed in claim 1, wherein classifying each of the plurality of newly generated alarms comprises:

classifying a newly generated alarm as the POI-added alarm if POI of the newly generated alarm is added in the source code ($V_2$) and the same POI is not present on the correspondingly mapped line in the previous version of the source code ($V_1$);
classifying the newly generated alarm as the POI-changed alarm if POI of the newly generated alarm is changed in the source code ($V_2$) and a similar alarm is generated for corresponding expression in the previous version of the source code ($V_1$); and
classifying the newly generated alarm as the result-changed alarm if POI of the newly generated alarm is unchanged between the source code ($V_2$) and the previous version of the source code ($V_1$), and a similar alarm was not generated for the corresponding expression in the previous version of the source code ($V_1$).

5. The method (300) as claimed in claim 1, wherein classifying each of the impacted alarms comprises:

classifying an impacted alarm as the data-dependency impacted alarm if at least one of the impacting code changes of the impacted alarm is on at least one program statement that appears on one or more thin slices generated for the impacted alarm and the corresponding alarm in $V_1$;
classifying the impacted alarm as the value-dependency impacted alarm if the at least one impacting code change of the impacted alarm is on the at least one program statement that appears on one or more value slices generated for the impacted alarm and the corresponding alarm in $V_1$ but not on the one or more thin slices generated for the impacted alarm and the corresponding alarm in $V_1$; and
classifying the impacted alarm as the control-dependency impacted alarm if the at least one impacting code change of the impacted alarm is on at least one program statement that appears on one or more backward slices generated for the impacted alarm and the corresponding alarm in $V_1$ but not on the one or more value slices generated for the impacted alarm and the corresponding alarm in $V_1$.

6. The method (300) as claimed in claim 1, wherein the impact analysis technique computes a set of program statements in the source code $V_2$ and the previous version of the source code $V_1$, wherein each of the program statements is affected due to the code changes between the source code ($V_2$) and the previous version of the source code ($V_1$), using at least one technique based on traces or dependencies.

7. The method (300) as claimed in claim 1, wherein the classes of the newly generated alarms and the impacted alarms are prioritized in the order of decreasing priority of classes as Result-changed alarms, POI-added alarms, POI-changed alarms, Data-dependency impacted alarms, Value-dependency impacted alarms, and Control-dependency impacted alarms.

8. A system (100) for code analysis, comprising:

one or more hardware processors (102);
a communication interface (103); and
a memory (101) storing a plurality of instructions, wherein the plurality of instructions when executed cause the one or more hardware processors to:

receive (302) a plurality of input data, wherein the plurality of input data comprises a source code ($V_2$) from a plurality of source codes, a previous version of source code ($V_1$), and static analysis results of the previous version of the source code ($V_1$);

generate (304) a set of static analysis alarms from the source code ($V_2$), based on analysis of the source code ($V_2$) using a static analysis technique;

construct (306) a code mapping based on the source code ($V_2$) and the previous version of the source code ($V_1$), using a code mapping technique;

compute (308) a set of delta alarms from amongst the static analysis alarms, using a delta alarms identification technique, based on the code mapping and the results of the static analysis on the previous version of the source code ($V_1$), wherein the computing of the set of delta alarms comprises:

> computing a set of newly generated alarms from the set of static analysis alarms, wherein each newly generated alarm in the set of static analysis alarms does not have a similar alarm corresponding to it in the previous version of the source code ($V_1$);
>
> computing a set of repeated alarms from the set of static analysis alarms, wherein each repeated alarm in the set of repeated alarms has a similar alarm corresponding to it in the previous version of the source code ($V_1$);
>
> computing a set of impacted alarms from amongst the repeated alarms in the set of repeated alarms, wherein an impact analysis technique is used to determine whether each of the repeated alarms is impacted by the code changes made between the source code ($V_2$) and the previous version of the source code ($V_1$); and
>
> constructing the set of delta alarms using the newly generated alarms and the impacted alarms;

classify (310) a plurality of delta alarms in the set of delta alarms, by classifying each of the newly generated alarms and impacted alarms, comprising:

> classifying each of the newly generated alarms as one of a result-changed alarm, a Point of Interest (POI)-added alarm, and a POI-changed alarm, based on at least one of (a) change to the POI of each of the newly generated alarms and, (b) result of the static analysis for the POI of each of the newly generated alarms; and
>
> classifying each of the impacted delta alarms as one of (a) data-dependency impacted alarm, (b) value-dependency impacted alarm, and (c) control-dependency impacted alarm, based on type of the impacting code changes of each of the impacted delta alarms;

rank (312) the delta alarms by prioritizing class of each of the newly generated alarms and the impacted alarms; and

report (314) the delta alarms, wherein reporting the delta alarms comprises grouping all impacted alarms belonging to same class and having the same set of impacting code changes, and reporting along with the impacting code changes.

9. The system (100) as claimed in claim 8, wherein the system constructs the code mapping based on the mapping technique, by:

identifying (402) one or more lines and the tokens deleted from the previous version of the source code ($V_1$);

identifying (404) one or more lines and the tokens added to the source code ($V_2$);

identifying (406) one or more lines and the tokens that remain unchanged in the source code ($V_2$) and the previous version of the source code ($V_1$), and creating mapping of the identified lines, and tokens; and

identifying (408) one or more lines and tokens that are changed, from the source code ($V_2$) and the previous version of the source code ($V_1$), and creating mapping of the identified lines and tokens.

10. The system (100) as claimed in claim 8, wherein the system identifies the similar alarm in $V_1$ corresponding to a static analysis alarm generated on $V_2$ based on whether the POI of the static analysis alarm is present on the correspondingly mapped line in $V_1$ and a similar alarm was generated for the same POI in $V_1$.

11. The system (100) as claimed in claim 8, wherein the system classifies each of the plurality of newly generated alarms by:

classifying a newly generated alarm as the POI-added alarm if POI of the newly generated alarm is added in the source code ($V_2$) and the same POI is not present on the correspondingly mapped line in the previous version of the source code ($V_1$);

classifying the newly generated alarm as the POI-changed alarm if POI of the newly generated alarm is changed in the source code ($V_2$) and a similar alarm is generated for corresponding expression in the previous version of the source code ($V_1$); and

classifying the newly generated alarm as the result-changed alarm if POI of the newly generated alarm is unchanged between the source code ($V_2$) and the previous version of the source code ($V_1$), and a similar alarm was not generated for the corresponding expression in the previous version of the source code ($V_1$).

12. The system (100) as claimed in claim 8, wherein the system classifies each of the impacted alarms by:

classifying an impacted alarm as the data-dependency impacted alarm if at least one of the impacting code changes of the impacted alarm is on at least one program statement that appears on one or more thin slices generated for the impacted alarm and the corresponding alarm in $V_1$;

classifying the impacted alarm as the value-dependency impacted alarm if the at least one impacting code change of the impacted alarm is on the at least one program statement that appears on one or more value slices generated for the impacted alarm and the corresponding alarm in $V_1$ but not on the one or more thin slices generated for the impacted alarm and the corresponding alarm in $V_1$; and

classifying the impacted alarm as the control-dependency impacted alarm if the at least one impacting code change of the impacted alarm is on at least one program statement that appears on one or more backward slices generated for the impacted alarm and the corresponding alarm in $V_1$ but not on the one or more value slices generated for the impacted alarm and the corresponding alarm in $V_1$.

13. The system (100) as claimed in claim 8, wherein the system computes a set of program statements in the source code $V_2$ and the previous version of the source code $V_1$, wherein each of the program statements is affected due to the code changes between the source code ($V_2$) and the previous version of the source code ($V_1$), using at least one impact analysis technique based on traces or dependencies.

14. The system (100) as claimed in claim 8, wherein the system prioritizes classes of the newly generated alarms and the impacted alarms in the order of decreasing priority of classes as Result-changed alarms, POI-added alarms, POI-changed alarms, Data-dependency impacted alarms, Value-dependency impacted alarms, and Control-dependency impacted alarms.

15. A non-transitory computer readable medium for code analysis, wherein the non-transitory computer readable medium comprising a plurality of instructions, which when executed, cause one or more hardware processors (102) to:

receive (302) a plurality of input data, wherein the plurality of input data comprises a source code ($V_2$) from a plurality of source codes, a previous version of source code ($V_1$), and static analysis results of the previous version of the source code ($V_1$);

generate (304) a set of static analysis alarms from the source code ($V_2$), based on analysis of the source code ($V_2$) using a static analysis technique;

construct (306) a code mapping based on the source code ($V_2$) and the previous version of the source code ($V_1$), using a code mapping technique;

compute (308) a set of delta alarms from amongst the static analysis alarms, using a delta alarms identification technique, based on the code mapping and the results of the static analysis on the previous version of the source code ($V_1$), wherein the computing of the set of delta alarms comprises:

computing a set of newly generated alarms from the set of static analysis alarms, wherein each newly generated alarm in the set of static analysis alarms does not have a similar alarm corresponding to it in the previous version of the source code ($V_1$);

computing a set of repeated alarms from the set of static analysis alarms, wherein each repeated alarm in the set of repeated alarms has a similar alarm corresponding to it in the previous version of the source code ($V_1$);

computing a set of impacted alarms from amongst the repeated alarms in the set of repeated alarms, wherein an impact analysis technique is used to determine whether each of the repeated alarms is impacted by the code changes made between the source code ($V_2$) and the previous version of the source code ($V_1$); and

constructing the set of delta alarms using the newly generated alarms and the impacted alarms;

classify (310) a plurality of delta alarms in the set of delta alarms, by classifying each of the newly generated alarms and impacted alarms, comprising:

classifying each of the newly generated alarms as one of a result-changed alarm, a Point of Interest (POI)-added alarm, and a POI-changed alarm, based on at least one of (a) change to the POI of each of the newly generated alarms and, (b) result of the static analysis for the POI of each of the newly generated alarms; and
classifying each of the impacted delta alarms as one of (a) data-dependency impacted alarm, (b) value-dependency impacted alarm, and (c) control-dependency impacted alarm, based on type of the impacting code changes of each of the impacted delta alarms;

rank (312) the delta alarms by prioritizing class of each of the newly generated alarms and the impacted alarms; and
report (314) the delta alarms, wherein reporting the delta alarms comprises grouping all impacted alarms belonging to same class and having the same set of impacting code changes, and reported along with the impacting code changes.

**Patentansprüche**

1. Prozessorimplementiertes Verfahren (300) zur Codeanalyse, das Folgendes umfasst:

Empfangen (302), über einen oder mehrere Hardwareprozessoren (102), mehrerer Eingangsdaten, wobei die mehreren Eingangsdaten einen Quellecode $(V_2)$ von mehreren Quellcodes, eine vorherige Version eines Quellcodes $(V_1)$ und Statikanalyseergebnisse der vorherigen Version des Quellcodes $(V_1)$ umfassen;
Erzeugen (304) eines Satzes von Statikanalysealarmen aus dem Quellcode $(V_2)$ basierend auf einer Analyse des Quellcodes $(V_2)$ unter Verwendung einer Statikanalysetechnik über den einen oder die mehreren Hardwareprozessoren;
Erstellen (306) eines Code-Mapping basierend auf dem Quellcode $(V_2)$ und der vorherigen Version des Quellcodes $(V_1)$ unter Verwendung einer Code-Mapping-Technik über den einen oder die mehreren Hardwareprozessoren;
Berechnen (308) eines Satzes von Deltaalarmen aus den Statikanalysealarmen unter Verwendung einer Deltaalarm-Identifikationstechnik basierend auf dem Code-Mapping und den Ergebnissen der Statikanalyse an der vorherigen Version des Quellcodes $(V_1)$ über den einen oder die mehreren Hardwareprozessoren, wobei das Berechnen des Satzes von Deltaalarmen Folgendes umfasst:

Berechnen eines Satzes neu erzeugter Alarme aus dem Satz von Statikanalysealarmen, wobei jeder neu erzeugte Alarm in dem Satz von Statikanalysealarmen keinen ihm entsprechenden ähnlichen Alarm in der vorherigen Version des Quellcodes $(V_1)$ aufweist;
Berechnen eines Satzes wiederholter Alarme aus dem Satz von Statikanalysealarmen, wobei jeder wiederholte Alarm in dem Satz von wiederholten Alarmen einen ihm entsprechenden ähnlichen Alarm in der vorherigen Version des Quellcodes $(V_1)$ aufweist;
Berechnen eines Satzes beeinträchtigter Alarme aus den wiederholten Alarmen in dem Satz wiederholter Alarme, wobei eine Beeinträchtigungsanalysetechnik verwendet wird, um zu bestimmen, ob jeder der wiederholten Alarme durch die zwischen dem Quellcode $(V_2)$ und der vorherigen Version des Quellcodes $(V_1)$ vorgenommenen Codeänderungen beeinträchtigt wird; und

Erstellen des Satzes von Deltaalarmen unter Verwendung der neu erzeugten Alarme und der beeinträchtigten Alarme;
Klassifizieren (310) mehrerer Deltaalarme in dem Satz von Deltaalarmen durch Klassifizieren jedes der neu erzeugten Alarme und beeinträchtigten Alarme über den einen oder
die mehreren Hardwareprozessoren, umfassend:

Klassifizieren jedes der neu erzeugten Alarme als einen ergebnisgeänderten Alarm oder einen Interessenspunkt(POI)-hinzugefügten Alarm oder einen POI-geänderten Alarm basierend auf (a) einer Änderung an dem POI jedes der neu erzeugten Alarme und/oder (b) einem Ergebnis der Statikanalyse für den POI jedes der neu erzeugten Alarme; und
Klassifizieren jedes der beeinträchtigten Deltaalarme als (a) Datenabhängigkeit-beeinträchtigten Alarm oder (b) Wertabhängigkeit-beeinträchtigten Alarm oder (c) Steuerabhängigkeit-beeinträchtigten Alarm basierend auf einer Art der beeinträchtigenden Codeänderungen jedes der beeinträchtigten Deltaalarme;

Einstufen (312) der Deltaalarme durch Priorisieren einer Klasse jedes der neu erzeugten Alarme und der beeinträchtigten Alarme über den einen oder die mehreren Hardwareprozessoren; und
Melden (314) der Deltaalarme, wobei das Melden der Deltaalarme Gruppieren aller beeinträchtigten Alarme, die zu derselben Klasse gehören und denselben Satz beeinträchtigender Codeänderungen aufweisen und zusammen mit den beeinträchtigenden Codeänderungen gemeldet werden, umfasst.

2. Verfahren (300) nach Anspruch 1, wobei der Schritt des Erstellens des Code-Mapping basierend auf der Mapping-Technik ferner Folgendes umfasst:

Identifizieren (402) einer oder mehrerer Zeilen und der Tokens, die aus der vorherigen Version des Quellcodes ($V_1$) gelöscht wurden;
Identifizieren (404) einer oder mehrerer Zeilen und der Tokens, die zu dem Quellcode ($V_2$) hinzugefügt wurden;
Identifizieren (406) einer oder mehrerer Zeilen und der Tokens, die in dem Quellcode ($V_2$) und der vorherigen Version des Quellcodes ($V_1$) unverändert bleiben, und Erzeugen eines Mapping der identifizierten Zeilen und Tokens; und
Identifizieren (408) einer oder mehrerer Zeilen und Tokens, die geändert sind, aus dem Quellcode ($V_2$) und der vorherigen Version des Quellcodes ($V_1$) und Erzeugen eines Mapping der identifizierten Zeilen und Tokens.

3. Verfahren (300) nach Anspruch 1, wobei eine Identifikation des ähnlichen Alarms in $V_1$, der einem bezüglich $V_2$ erzeugten Statikanalysealarm entspricht, darauf basiert, ob der POI des Statikanalysealarms in der entsprechend abgebildeten Zeile in $V_1$ vorhanden ist und ein ähnlicher Alarm für denselben POI in $V_1$ erzeugt wurde.

4. Verfahren (300) nach Anspruch 1, wobei das Klassifizieren jedes der mehreren neu erzeugten Alarme Folgendes umfasst:

Klassifizieren eines neu erzeugten Alarms als den POIhinzugefügten Alarm, wenn der POI des neu erzeugten Alarms in dem Quellcode ($V_2$) hinzugefügt ist und derselbe POI in der entsprechend abgebildeten Zeile in der vorherigen Version des Quellcodes ($V_1$) nicht vorhanden ist;
Klassifizieren des neu erzeugten Alarms als den POI-geänderten Alarm, wenn der POI des neu erzeugten Alarms in dem Quellcode ($V_2$) geändert ist und ein ähnlicher Alarm für einen entsprechenden Ausdruck in der vorherigen Version des Quellcodes ($V_1$) erzeugt wird; und
Klassifizieren des neu erzeugten Alarms als den ergebnisgeänderten Alarm, wenn der POI des neu erzeugten Alarms zwischen dem Quellcode ($V_2$) und der vorherigen Version des Quellcodes ($V_1$) unverändert ist und kein ähnlicher Alarm für den entsprechenden Ausdruck in der vorherigen Version des Quellcodes ($V_1$) erzeugt wurde.

5. Verfahren (300) nach Anspruch 1, wobei das Klassifizieren jedes der beeinträchtigten Alarme Folgendes umfasst:

Klassifizieren eines beeinträchtigten Alarms als den Datenabhängigkeit-beeinträchtigten Alarm, wenn mindestens eine der beeinträchtigenden Codeänderungen des beeinträchtigten Alarms bezüglich mindestens eines Programm-Statements ist, das auf einem oder mehreren für den beeinträchtigten Alarm und den entsprechenden Alarm in $V_1$ erzeugten dünnen Slices erscheint;
Klassifizieren des beeinträchtigten Alarms als den Wertabhängigkeit-beeinträchtigten Alarm, wenn die mindestens eine beeinträchtigende Codeänderungen des beeinträchtigten Alarms bezüglich des mindestens einen Programm-Statements ist, das auf einem oder mehreren für den beeinträchtigten Alarm und den entsprechenden Alarm in $V_1$ erzeugten Wert-Slices aber nicht auf dem einen oder den mehreren für den beeinträchtigten Alarm und den entsprechenden Alarm in $V_1$ erzeugten dünnen Slices erscheint;
Klassifizieren des beeinträchtigten Alarms als den Steuerabhängigkeit-beeinträchtigten Alarm, wenn die mindestens eine beeinträchtigende Codeänderungen des beeinträchtigten Alarms bezüglich mindestens eines Programm-Statements ist, das auf einem oder mehreren für den beeinträchtigten Alarm und den entsprechenden Alarm in $V_1$ erzeugten Rückwärts-Slices aber nicht auf dem einen oder den mehreren für den beeinträchtigten Alarm und den entsprechenden Alarm in $V_1$ erzeugten Wert-Slices erscheint.

6. Verfahren (300) nach Anspruch 1, wobei die Beeinträchtigungsanalysetechnik einen Satz von Programm-Statements in dem Quellcode $V_2$ und der vorherigen Version des Quellcodes $V_1$, wobei jedes der Programm-Statements aufgrund der Codeänderungen zwischen dem Quellcode ($V_2$) und der vorherigen Version des Quellcodes ($V_1$) betroffen ist, unter Verwendung mindestens einer Technik basierend auf Zurückverfolgungen oder Abhängigkeiten berechnet.

7. Verfahren (300) nach Anspruch 1, wobei die Klassen der neu erzeugten Alarme und der beeinträchtigten Alarme in der Reihenfolge abnehmender Priorität von Klassen als ergebnisgeänderte Alarme, POI-hinzugefügte Alarme, POI-geänderte Alarme, Datenabhängigkeit-beeinträchtigte Alarme, Wertabhängigkeit-beeinträchtigte Alarme und Steuerabhängigkeit-beeinträchtigte Alarme priorisiert werden.

8. System (100) zur Codeanalyse, das Folgendes umfasst:

einen oder mehrere Hardwareprozessoren (102);
eine Kommunikationsschnittstelle (103); und
einen Speicher (101), der mehrere Anweisungen speichert, wobei die mehreren Anweisungen bei Ausführung bewirken, dass der eine oder die mehreren Hardwareprozessoren Folgendes durchführen:

Empfangen (302) mehrerer Eingangsdaten, wobei die mehreren Eingangsdaten einen Quellecode $(V_2)$ von mehreren Quellcodes, eine vorherige Version eines Quellcodes $(V_1)$ und Statikanalyseergebnisse der vorherigen Version des Quellcodes $(V_1)$ umfassen;
Erzeugen (304) eines Satzes von Statikanalysealarmen aus dem Quellcode $(V_2)$ basierend auf einer Analyse des Quellcodes $(V_2)$ unter Verwendung einer Statikanalysetechnik;
Erstellen (306) eines Code-Mapping basierend auf dem Quellcode $(V_2)$ und der vorherigen Version des Quellcodes $(V_1)$ unter Verwendung einer Code-Mapping-Technik;
Berechnen (308) eines Satzes von Deltaalarmen aus den Statikanalysealarmen unter Verwendung einer Deltaalarm-Identifikationstechnik basierend auf dem Code-Mapping und den Ergebnissen der Statikanalyse an der vorherigen Version des Quellcodes $(V_1)$, wobei das Berechnen des Satzes von Deltaalarmen Folgendes umfasst:

Berechnen eines Satzes neu erzeugter Alarme aus dem Satz von Statikanalysealarmen, wobei jeder neu erzeugte Alarm in dem Satz von Statikanalysealarmen keinen ihm entsprechenden ähnlichen Alarm in der vorherigen Version des Quellcodes $(V_1)$ aufweist;
Berechnen eines Satzes wiederholter Alarme aus dem Satz von Statikanalysealarmen, wobei jeder wiederholte Alarm in dem Satz von wiederholten Alarmen einen ihm entsprechenden ähnlichen Alarm in der vorherigen Version des Quellcodes $(V_1)$ aufweist;
Berechnen eines Satzes beeinträchtigter Alarme aus den wiederholten Alarmen in dem Satz wiederholter Alarme, wobei eine Beeinträchtigungsanalysetechnik verwendet wird, um zu bestimmen, ob jeder der wiederholten Alarme durch die zwischen dem Quellcode $(V_2)$ und der vorherigen Version des Quellcodes $(V_1)$ vorgenommenen Codeänderungen beeinträchtigt wird; und
Erstellen des Satzes von Deltaalarmen unter Verwendung der neu erzeugten Alarme und der beeinträchtigten Alarme;

Klassifizieren (310) mehrerer Deltaalarme in dem Satz von Deltaalarmen durch Klassifizieren jedes der neu erzeugten Alarme und beeinträchtigten Alarme, umfassend:

Klassifizieren jedes der neu erzeugten Alarme als einen ergebnisgeänderten Alarm oder einen Interessenspunkt(POI)-hinzugefügten Alarm oder einen POI-geänderten Alarm basierend auf (a) einer Änderung an dem POI jedes der neu erzeugten Alarme und/oder (b) einem Ergebnis der Statikanalyse für den POI jedes der neu erzeugten Alarme; und
Klassifizieren jedes der beeinträchtigten Deltaalarme als (a) Datenabhängigkeit-beeinträchtigten Alarm oder (b) Wertabhängigkeit-beeinträchtigten Alarm oder (c) Steuerabhängigkeit-beeinträchtigten Alarm basierend auf einer Art der beeinträchtigenden Codeänderungen jedes der beeinträchtigten Deltaalarme;

Einstufen (312) der Deltaalarme durch Priorisieren einer Klasse jedes der neu erzeugten Alarme und der beeinträchtigten Alarme; und
Melden (314) der Deltaalarme, wobei das Melden der Deltaalarme Gruppieren aller beeinträchtigten Alarme, die zu derselben Klasse gehören und denselben Satz beeinträchtigender Codeänderungen aufweisen, und Melden zusammen mit den beeinträchtigenden Codeänderungen umfasst.

9. System (100) nach Anspruch 8, wobei das System das Code-Mapping basierend auf der Mapping-Technik durch Folgendes erstellt:

Identifizieren (402) einer oder mehrerer Zeilen und der Tokens, die aus der vorherigen Version des Quellcodes ($V_1$) gelöscht wurden;

Identifizieren (404) einer oder mehrerer Zeilen und der Tokens, die zu dem Quellcode ($V_2$) hinzugefügt wurden;

Identifizieren (406) einer oder mehrerer Zeilen und der Tokens, die in dem Quellcode ($V_2$) und der vorherigen Version des Quellcodes ($V_1$) unverändert bleiben, und Erzeugen eines Mapping der identifizierten Zeilen und Tokens; und

Identifizieren (408) einer oder mehrerer Zeilen und Tokens, die geändert sind, aus dem Quellcode ($V_2$) und der vorherigen Version des Quellcodes ($V_1$) und Erzeugen eines Mapping der identifizierten Zeilen und Tokens.

10. System (100) nach Anspruch 8, wobei das System den ähnlichen Alarm in $V_1$, der einem bezüglich $V_2$ erzeugten Statikanalysealarm entspricht, basiert darauf identifiziert, ob der POI des Statikanalysealarms in der entsprechend abgebildeten Zeile in $V_1$ vorhanden ist und ein ähnlicher Alarm für denselben POI in $V_1$ erzeugt wurde.

11. System (100) nach Anspruch 8, wobei das System jeden der mehreren neu erzeugten Alarme durch Folgendes klassifiziert:

Klassifizieren eines neu erzeugten Alarms als den POIhinzugefügten Alarm, wenn der POI des neu erzeugten Alarms in dem Quellcode ($V_2$) hinzugefügt ist und derselbe POI in der entsprechend abgebildeten Zeile in der vorherigen Version des Quellcodes ($V_1$) nicht vorhanden ist;

Klassifizieren des neu erzeugten Alarms als den POI-geänderten Alarm, wenn der POI des neu erzeugten Alarms in dem Quellcode ($V_2$) geändert ist und ein ähnlicher Alarm für einen entsprechenden Ausdruck in der vorherigen Version des Quellcodes ($V_1$) erzeugt wird; und

Klassifizieren des neu erzeugten Alarms als den ergebnisgeänderten Alarm, wenn der POI des neu erzeugten Alarms zwischen dem Quellcode ($V_2$) und der vorherigen Version des Quellcodes ($V_1$) unverändert ist und kein ähnlicher Alarm für den entsprechenden Ausdruck in der vorherigen Version des Quellcodes ($V_1$) erzeugt wurde.

12. System (100) nach Anspruch 8, wobei das System jeden der mehreren beeinträchtigten Alarme durch Folgendes klassifiziert:

Klassifizieren eines beeinträchtigten Alarms als den Datenabhängigkeit-beeinträchtigten Alarm, wenn mindestens eine der beeinträchtigenden Codeänderungen des beeinträchtigten Alarms bezüglich mindestens eines Programm-Statements ist, das auf einem oder mehreren für den beeinträchtigten Alarm und den entsprechenden Alarm in $V_1$ erzeugten dünnen Slices erscheint;

Klassifizieren des beeinträchtigten Alarms als den Wertabhängigkeit-beeinträchtigten Alarm, wenn die mindestens eine beeinträchtigende Codeänderungen des beeinträchtigten Alarms bezüglich des mindestens einen Programm-Statements ist, das auf einem oder mehreren für den beeinträchtigten Alarm und den entsprechenden Alarm in $V_1$ erzeugten Wert-Slices aber nicht auf dem einen oder den mehreren für den beeinträchtigten Alarm und den entsprechenden Alarm in $V_1$ erzeugten dünnen Slices erscheint;

Klassifizieren des beeinträchtigten Alarms als den Steuerabhängigkeit-beeinträchtigten Alarm, wenn die mindestens eine beeinträchtigende Codeänderungen des beeinträchtigten Alarms bezüglich mindestens eines Programm-Statements ist, das auf einem oder mehreren für den beeinträchtigten Alarm und den entsprechenden Alarm in $V_1$ erzeugten Rückwärts-Slices aber nicht auf dem einen oder den mehreren für den beeinträchtigten Alarm und den entsprechenden Alarm in $V_1$ erzeugten Wert-Slices erscheint.

13. System (100) nach Anspruch 8, wobei das System einen Satz von Programm-Statements in dem Quellcode $V_2$ und der vorherigen Version des Quellcodes $V_1$, wobei jedes der Programm-Statements aufgrund der Codeänderungen zwischen dem Quellcode ($V_2$) und der vorherigen Version des Quellcodes ($V_1$) betroffen ist, unter Verwendung mindestens einer Beeinträchtigungsanalysetechnik basierend auf Zurückverfolgungen oder Abhängigkeiten berechnet.

14. System (100) nach Anspruch 8, wobei das System die Klassen der neu erzeugten Alarme und der beeinträchtigten Alarme in der Reihenfolge abnehmender Priorität von Klassen als ergebnisgeänderte Alarme, POI-hinzugefügte Alarme, POI-geänderte Alarme, Datenabhängigkeit-beeinträchtigte Alarme, Wertabhängigkeit-beeinträchtigte Alarme und Steuerabhängigkeit-beeinträchtigte Alarme priorisiert.

15. Nichtflüchtiges computerlesbares Medium zur Codeanalyse, wobei das nichtflüchtige computerlesbare Medium mehrere Anweisungen umfasst, die bei Ausführung bewirken, dass ein oder mehrere Hardwareprozessoren (102) Folgendes durchführen:

Empfangen (302) mehrerer Eingangsdaten, wobei die mehreren Eingangsdaten einen Quellcode ($V_2$) von mehreren Quellcodes, eine vorherige Version eines Quellcodes ($V_1$) und Statikanalyseergebnisse der vorherigen Version des Quellcodes ($V_1$) umfassen;

Erzeugen (304) eines Satzes von Statikanalysealarmen aus dem Quellcode ($V_2$) basierend auf einer Analyse des Quellcodes ($V_2$) unter Verwendung einer Statikanalysetechnik;

Erstellen (306) eines Code-Mapping basierend auf dem Quellcode ($V_2$) und der vorherigen Version des Quellcodes ($V_1$) unter Verwendung einer Code-Mapping-Technik;

Berechnen (308) eines Satzes von Deltaalarmen aus den Statikanalysealarmen unter Verwendung einer Deltaalarm-Identifikationstechnik basierend auf dem Code-Mapping und den Ergebnissen der Statikanalyse an der vorherigen Version des Quellcodes ($V_1$), wobei das Berechnen des Satzes von Deltaalarmen Folgendes umfasst:

Berechnen eines Satzes neu erzeugter Alarme aus dem Satz von Statikanalysealarmen, wobei jeder neu erzeugte Alarm in dem Satz von Statikanalysealarmen keinen ihm entsprechenden ähnlichen Alarm in der vorherigen Version des Quellcodes ($V_1$) aufweist;

Berechnen eines Satzes wiederholter Alarme aus dem Satz von Statikanalysealarmen, wobei jeder wiederholte Alarm in dem Satz von wiederholten Alarmen einen ihm entsprechenden ähnlichen Alarm in der vorherigen Version des Quellcodes ($V_1$) aufweist;

Berechnen eines Satzes beeinträchtigter Alarme aus den wiederholten Alarmen in dem Satz wiederholter Alarme, wobei eine Beeinträchtigungsanalysetechnik verwendet wird, um zu bestimmen, ob jeder der wiederholten Alarme durch die zwischen dem Quellcode ($V_2$) und der vorherigen Version des Quellcodes ($V_1$) vorgenommenen Codeänderungen beeinträchtigt wird; und

Erstellen des Satzes von Deltaalarmen unter Verwendung der neu erzeugten Alarme und der beeinträchtigten Alarme;

Klassifizieren (310) mehrerer Deltaalarme in dem Satz von Deltaalarmen durch Klassifizieren jedes der neu erzeugten Alarme und beeinträchtigten Alarme, umfassend:

Klassifizieren jedes der neu erzeugten Alarme als einen ergebnisgeänderten Alarm oder einen Interessenspunkt(POI)-hinzugefügten Alarm oder einen POI-geänderten Alarm basierend auf (a) einer Änderung an dem POI jedes der neu erzeugten Alarme und/oder (b) einem Ergebnis der Statikanalyse für den POI jedes der neu erzeugten Alarme; und

Klassifizieren jedes der beeinträchtigten Deltaalarme als (a) Datenabhängigkeit-beeinträchtigten Alarm oder (b) Wertabhängigkeit-beeinträchtigten Alarm oder (c) Steuerabhängigkeit-beeinträchtigten Alarm basierend auf einer Art der beeinträchtigenden Codeänderungen jedes der beeinträchtigten Deltaalarme;

Einstufen (312) der Deltaalarme durch Priorisieren einer Klasse jedes der neu erzeugten Alarme und der beeinträchtigten Alarme; und

Melden (314) der Deltaalarme, wobei das Melden der Deltaalarme Gruppieren aller beeinträchtigten Alarme, die zu derselben Klasse gehören und denselben Satz beeinträchtigender Codeänderungen aufweisen zusammen mit den beeinträchtigenden Codeänderungen gemeldet werden, umfasst.

## Revendications

1. Procédé (300), mis en œuvre par ordinateur, d'analyse de code, comprenant :

la réception (302), via un ou plusieurs processeurs matériels (102), d'une pluralité de données d'entrée, la pluralité de données d'entrée comprenant un code source ($V_2$) issu d'une pluralité de codes sources, une version précédente de code source ($V_1$) et des résultats d'analyse statique de la version précédente du code source ($V_1$) ;

la génération (304) d'un ensemble d'alarmes d'analyse statique à partir du code source ($V_2$), sur la base d'une analyse du code source ($V_2$) à l'aide d'une technique d'analyse statique, via les un ou plusieurs processeurs matériels ;

la construction (306) d'un mappage de code sur la base du code source ($V_2$) et de la version précédente du

code source ($V_1$), à l'aide d'une technique de mappage de code, via les un ou plusieurs processeurs matériels ;
le calcul (308) d'un ensemble d'alarmes delta parmi les alarmes d'analyse statique, à l'aide d'une technique d'identification d'alarmes delta, sur la base du mappage de code et des résultats de l'analyse statique sur la version précédente du code source ($V_1$), via les un ou plusieurs processeurs matériels, le calcul de l'ensemble d'alarmes delta comprenant :

le calcul d'un ensemble d'alarmes nouvellement générées à partir de l'ensemble d'alarmes d'analyse statique, chaque alarme nouvellement générée dans l'ensemble d'alarmes d'analyse statique n'ayant pas une alarme similaire qui lui correspond dans la version précédente du code source ($V_1$) ;
le calcul d'un ensemble d'alarmes répétées à partir de l'ensemble d'alarmes d'analyse statique, chaque alarme répétée dans l'ensemble d'alarmes répétées ayant une alarme similaire qui lui correspond dans la version précédente du code source ($V_1$) ;
le calcul d'un ensemble d'alarmes impactées parmi les alarmes répétées dans l'ensemble d'alarmes répétées, une technique d'analyse d'impact étant utilisée pour déterminer si chacune des alarmes répétées est impactée ou non par les changements de code apportés entre le code source ($V_2$) et la version précédente du code source ($V_1$) ; et
la construction de l'ensemble d'alarmes delta à l'aide des alarmes nouvellement générées et des alarmes impactées ;

la classification (310) d'une pluralité d'alarmes delta dans l'ensemble d'alarmes delta par classification de chacune des alarmes nouvellement générées et des alarmes impactées via les un ou plusieurs processeurs matériels, comprenant :

la classification de chacune des alarmes nouvellement générées soit comme une alarme de changement de résultat, soit comme une alarme d'ajout de Point d'intérêt (POI), soit comme une alarme de changement de POI, sur la base (a) d'un changement apporté au POI de chacune des alarmes nouvellement générées et/ou (b) d'un résultat de l'analyse statique pour le POI de chacune des alarmes nouvellement générées ; et
la classification de chacune des alarmes delta impactées soit comme (a) une alarme impactée en dépendance de données, soit comme (b) une alarme impactée en dépendance de valeur, soit comme (c) une alarme impactée en dépendance de contrôle, sur la base d'un type des changements de code impactants de chacune des alarmes delta impactées ;

le classement (312) des alarmes delta par priorisation de la classe de chacune des alarmes nouvellement générées et des alarmes impactées, via les un ou plusieurs processeurs matériels ; et
la notification (314) des alarmes delta, la notification des alarmes delta comprenant le regroupement de toutes les alarmes impactées appartenant à une même classe et présentant le même ensemble de changements de code impactants, et notifiées conjointement avec les changements de code impactants.

2.  Procédé (300) selon la revendication 1, dans lequel l'étape de construction du mappage de code sur la base de la technique de mappage comprend en outre :

l'identification (402) d'une ou de plusieurs lignes et des jetons supprimés de la version précédente du code source ($V_1$) ;
l'identification (404) d'une ou de plusieurs lignes et des jetons ajoutés au code source ($V_2$) ;
l'identification (406) d'une ou de plusieurs lignes et des jetons restant inchangés dans le code source ($V_2$) et la version précédente du code source ($V_1$), et la création d'un mappage des lignes et jetons identifiés ; et
l'identification (408) d'une ou de plusieurs lignes et de jetons qui ont changé, par rapport au code source ($V_2$) et à la version précédente du code source ($V_1$), et la création d'un mappage des lignes et jetons identifiés.

3.  Procédé (300) selon la revendication 1, dans lequel l'identification de l'alarme similaire dans $V_1$ correspondant à une alarme d'analyse statique générée sur $V_2$ est basée sur la présence ou non du POI de l'alarme d'analyse statique sur la ligne mappée de façon correspondante dans $V_1$ et le fait qu'une alarme similaire a été ou non générée pour le même POI dans $V_1$.

4.  Procédé (300) selon la revendication 1, dans lequel la classification de chacune de la pluralité d'alarmes nouvellement générées comprend :

la classification d'une alarme nouvellement générée comme l'alarme d'ajout de POI si le POI de l'alarme nouvellement générée est ajouté dans le code source ($V_2$) et le même POI n'est pas présent sur la ligne mappée de façon correspondante dans la version précédente du code source ($V_1$) ;

la classification de l'alarme nouvellement générée comme l'alarme de changement de POI si le POI de l'alarme nouvellement générée est changé dans le code source ($V_2$) et une alarme similaire est générée pour une expression correspondante dans la version précédente du code source ($V_1$) ; et

la classification de l'alarme nouvellement générée comme l'alarme de changement de résultat si le POI de l'alarme nouvellement générée est inchangé entre le code source ($V_2$) et la version précédente du code source ($V_1$), et une alarme similaire n'a pas été générée pour l'expression correspondante dans la version précédente du code source ($V_1$).

5. Procédé (300) selon la revendication 1, dans lequel la classification de chacune des alarmes impactées comprend :

la classification d'une alarme impactée comme l'alarme impactée en dépendance de données si au moins un des changements de code impactants de l'alarme impactée se trouve sur au moins un énoncé de programme qui apparaît sur une ou plusieurs tranches minces générées pour l'alarme impactée et l'alarme correspondante dans $V_1$ ;

la classification de l'alarme impactée comme l'alarme impactée en dépendance de valeur si l'au moins un changement de code impactant de l'alarme impactée se trouve sur l'au moins un énoncé de programme qui apparaît sur une ou plusieurs tranches de valeur générées pour l'alarme impactée et l'alarme correspondante dans $V_1$ mais pas sur les une ou plusieurs tranches minces générées pour l'alarme impactée et l'alarme correspondante dans $V_1$ ; et

la classification de l'alarme impactée comme l'alarme impactée en dépendance de contrôle si l'au moins un changement de code impactant de l'alarme impactée se trouve sur au moins un énoncé de programme qui apparaît sur une ou plusieurs tranches arrière générées pour l'alarme impactée et l'alarme correspondante dans $V_1$ mais pas sur les une ou plusieurs tranches de valeur générées pour l'alarme impactée et l'alarme correspondante dans $V_1$.

6. Procédé (300) selon la revendication 1, dans lequel la technique d'analyse d'impact calcule un ensemble d'énoncés de programme dans le code source $V_2$ et la version précédente du code source $V_1$, chacun des énoncés de programme étant affecté du fait des changements de code entre le code source ($V_2$) et la version précédente du code source ($V_1$), à l'aide d'au moins une technique basée sur des traces ou des dépendances.

7. Procédé (300) selon la revendication 1, dans lequel les classes des alarmes nouvellement générées et des alarmes impactées sont priorisées par ordre de priorité décroissante de classes comme alarmes de changement de résultat, alarmes d'ajout de POI, alarmes de changement de POI, alarmes impactées en dépendance de données, alarmes impactées en dépendance de valeur, et alarmes impactées en dépendance de contrôle.

8. Système (100) d'analyse de code, comprenant :

un ou plusieurs processeurs matériels (102) ;
une interface de communication (103) ; et
une mémoire (101) stockant une pluralité d'instructions, la pluralité d'instructions, lorsqu'elles sont exécutées, amenant les un ou plusieurs processeurs matériels à :

recevoir (302) une pluralité de données d'entrée, la pluralité de données d'entrée comprenant un code source ($V_2$) issu d'une pluralité de codes sources, une version précédente de code source ($V_1$) et des résultats d'analyse statique de la version précédente du code source ($V_1$) ;
générer (304) un ensemble d'alarmes d'analyse statique à partir du code source ($V_2$), sur la base d'une analyse du code source ($V_2$) à l'aide d'une technique d'analyse statique ;
construire (306) un mappage de code sur la base du code source ($V_2$) et de la version précédente du code source ($V_1$), à l'aide d'une technique de mappage de code;
calculer (308) un ensemble d'alarmes delta parmi les alarmes d'analyse statique, à l'aide d'une technique d'identification d'alarmes delta, sur la base du mappage de code et des résultats de l'analyse statique sur la version précédente du code source ($V_1$), le calcul de l'ensemble d'alarmes delta comprenant :

le calcul d'un ensemble d'alarmes nouvellement générées à partir de l'ensemble d'alarmes d'analyse statique, chaque alarme nouvellement générée dans l'ensemble d'alarmes d'analyse statique n'ayant pas une alarme similaire qui lui correspond dans la version précédente du code source ($V_1$) ;

le calcul d'un ensemble d'alarmes répétées à partir de l'ensemble d'alarmes d'analyse statique, chaque alarme répétée dans l'ensemble d'alarmes répétées ayant une alarme similaire qui lui correspond dans la version précédente du code source ($V_1$) ;

le calcul d'un ensemble d'alarmes impactées parmi les alarmes répétées dans l'ensemble d'alarmes répétées, une technique d'analyse d'impact étant utilisée pour déterminer si chacune des alarmes répétées est impactée ou non par les changements de code apportés entre le code source ($V_2$) et la version précédente du code source ($V_1$) ; et

la construction de l'ensemble d'alarmes delta à l'aide des alarmes nouvellement générées et des alarmes impactées ;

classifier (310) une pluralité d'alarmes delta dans l'ensemble d'alarmes delta par classification de chacune des alarmes nouvellement générées et des alarmes impactées, comprenant :

la classification de chacune des alarmes nouvellement générées soit comme une alarme de changement de résultat, soit comme une alarme d'ajout de Point d'intérêt (POI), soit comme une alarme de changement de POI, sur la base (a) d'un changement apporté au POI de chacune des alarmes nouvellement générées et/ou (b) d'un résultat de l'analyse statique pour le POI de chacune des alarmes nouvellement générées ; et

la classification de chacune des alarmes delta impactées soit comme (a) une alarme impactée en dépendance de données, soit comme (b) une alarme impactée en dépendance de valeur, soit comme (c) une alarme impactée en dépendance de contrôle, sur la base d'un type des changements de code impactants de chacune des alarmes delta impactées ;

classer (312) les alarmes delta par priorisation de la classe de chacune des alarmes nouvellement générées et des alarmes impactées ; et

notifier (314) les alarmes delta, la notification des alarmes delta comprenant le regroupement de toutes les alarmes impactées appartenant à une même classe et présentant le même ensemble de changements de code impactants, et la notification conjointement avec les changements de code impactants.

9. Système (100) selon la revendication 8, le système construisant le mappage de code sur la base de la technique de mappage par :

identification (402) d'une ou de plusieurs lignes et des jetons supprimés de la version précédente du code source ($V_1$) ;

identification (404) d'une ou de plusieurs lignes et des jetons ajoutés au code source ($V_2$) ;

identification (406) d'une ou de plusieurs lignes et des jetons restant inchangés dans le code source ($V_2$) et la version précédente du code source ($V_1$), et création d'un mappage des lignes et jetons identifiés ; et

identification (408) d'une ou de plusieurs lignes et de jetons qui ont changé, par rapport au code source ($V_2$) et à la version précédente du code source ($V_1$), et création d'un mappage des lignes et jetons identifiés.

10. Système (100) selon la revendication 8, le système identifiant l'alarme similaire dans $V_1$ correspondant à une alarme d'analyse statique générée sur $V_2$ sur la base de la présence ou non du POI de l'alarme d'analyse statique sur la ligne mappée de façon correspondante dans $V_1$ et du fait qu'une alarme similaire a été ou non générée pour le même POI dans $V_1$.

11. Système (100) selon la revendication 8, le système classifiant chacune de la pluralité d'alarmes nouvellement générées par :

classification d'une alarme nouvellement générée comme l'alarme d'ajout de POI si le POI de l'alarme nouvellement générée est ajouté dans le code source ($V_2$) et le même POI n'est pas présent sur la ligne mappée de façon correspondante dans la version précédente du code source ($V_1$) ;

classification de l'alarme nouvellement générée comme l'alarme de changement de POI si le POI de l'alarme nouvellement générée est changé dans le code source ($V_2$) et une alarme similaire est générée pour une expression correspondante dans la version précédente du code source ($V_1$) ; et

classification de l'alarme nouvellement générée comme l'alarme de changement de résultat si le POI de l'alarme nouvellement générée est inchangé entre le code source ($V_2$) et la version précédente du code source ($V_1$), et une alarme similaire n'a pas été générée pour l'expression correspondante dans la version précédente du code source ($V_1$).

**12.** Système (100) selon la revendication 8, le système classifiant chacune des alarmes impactées par :

classification d'une alarme impactée comme l'alarme impactée en dépendance de données si au moins un des changements de code impactants de l'alarme impactée se trouve sur au moins un énoncé de programme qui apparaît sur une ou plusieurs tranches minces générées pour l'alarme impactée et l'alarme correspondante dans $V_1$ ;

classification de l'alarme impactée comme l'alarme impactée en dépendance de valeur si l'au moins un changement de code impactant de l'alarme impactée se trouve sur l'au moins un énoncé de programme qui apparaît sur une ou plusieurs tranches de valeur générées pour l'alarme impactée et l'alarme correspondante dans $V_1$ mais pas sur les une ou plusieurs tranches minces générées pour l'alarme impactée et l'alarme correspondante dans $V_1$ ; et

classification de l'alarme impactée comme l'alarme impactée en dépendance de contrôle si l'au moins un changement de code impactant de l'alarme impactée se trouve sur au moins un énoncé de programme qui apparaît sur une ou plusieurs tranches arrière générées pour l'alarme impactée et l'alarme correspondante dans $V_1$ mais pas sur les une ou plusieurs tranches de valeur générées pour l'alarme impactée et l'alarme correspondante dans $V_1$.

**13.** Système (100) selon la revendication 8, le système calculant un ensemble d'énoncés de programme dans le code source $V_2$ et la version précédente du code source $V_1$, chacun des énoncés de programme étant affecté du fait des changements de code entre le code source ($V_2$) et la version précédente du code source ($V_1$), à l'aide d'au moins une technique d'analyse d'impact basée sur des traces ou des dépendances.

**14.** Système (100) selon la revendication 8, le système priorisant les classes des alarmes nouvellement générées et des alarmes impactées par ordre de priorité décroissante de classes comme alarmes de changement de résultat, alarmes d'ajout de POI, alarmes de changement de POI, alarmes impactées en dépendance de données, alarmes impactées en dépendance de valeur, et alarmes impactées en dépendance de contrôle.

**15.** Support non transitoire lisible par ordinateur pour l'analyse de code, le support non transitoire lisible par ordinateur comprenant une pluralité d'instructions qui, lorsqu'elles sont exécutées, amènent un ou plusieurs processeurs matériels (102) à :

recevoir (302) une pluralité de données d'entrée, la pluralité de données d'entrée comprenant un code source ($V_2$) issu d'une pluralité de codes sources, une version précédente de code source ($V_1$) et des résultats d'analyse statique de la version précédente du code source ($V_1$) ;

générer (304) un ensemble d'alarmes d'analyse statique à partir du code source ($V_2$), sur la base d'une analyse du code source ($V_2$) à l'aide d'une technique d'analyse statique ;

construire (306) un mappage de code sur la base du code source ($V_2$) et de la version précédente du code source ($V_1$), à l'aide d'une technique de mappage de code ;

calculer (308) un ensemble d'alarmes delta parmi les alarmes d'analyse statique, à l'aide d'une technique d'identification d'alarmes delta, sur la base du mappage de code et des résultats de l'analyse statique sur la version précédente du code source ($V_1$), le calcul de l'ensemble d'alarmes delta comprenant :

le calcul d'un ensemble d'alarmes nouvellement générées à partir de l'ensemble d'alarmes d'analyse statique, chaque alarme nouvellement générée dans l'ensemble d'alarmes d'analyse statique n'ayant pas une alarme similaire qui lui correspond dans la version précédente du code source ($V_1$) ;

le calcul d'un ensemble d'alarmes répétées à partir de l'ensemble d'alarmes d'analyse statique, chaque alarme répétée dans l'ensemble d'alarmes répétées ayant une alarme similaire qui lui correspond dans la version précédente du code source ($V_1$) ;

le calcul d'un ensemble d'alarmes impactées parmi les alarmes répétées dans l'ensemble d'alarmes répétées, une technique d'analyse d'impact étant utilisée pour déterminer si chacune des alarmes répétées est impactée ou non par les changements de code apportés entre le code source ($V_2$) et la version précédente du code source ($V_1$) ; et

la construction de l'ensemble d'alarmes delta à l'aide des alarmes nouvellement générées et des alarmes impactées ;

classifier (310) une pluralité d'alarmes delta dans l'ensemble d'alarmes delta par classification de chacune des alarmes nouvellement générées et des alarmes impactées, comprenant :

la classification de chacune des alarmes nouvellement générées soit comme une alarme de changement de résultat, soit comme une alarme d'ajout de Point d'intérêt (POI), soit comme une alarme de changement de POI, sur la base (a) d'un changement apporté au POI de chacune des alarmes nouvellement générées et/ou (b) d'un résultat de l'analyse statique pour le POI de chacune des alarmes nouvellement générées ; et
la classification de chacune des alarmes delta impactées soit comme (a) une alarme impactée en dépendance de données, soit comme (b) une alarme impactée en dépendance de valeur, soit comme (c) une alarme impactée en dépendance de contrôle, sur la base d'un type des changements de code impactants de chacune des alarmes delta impactées ;

classer (312) les alarmes delta par priorisation de la classe de chacune des alarmes nouvellement générées et des alarmes impactées ; et
notifier (314) les alarmes delta, la notification des alarmes delta comprenant le regroupement de toutes les alarmes impactées appartenant à une même classe et présentant le même ensemble de changements de code impactants, et notifiées conjointement avec les changements de code impactants.

Memory
101

Hardware processor(s) 102

Communication interface(s) 103

System 100

FIG. 1

Source code V$_2$    Previous version    Results of static
              source code V$_1$    analysis on V$_1$

Static
analyzer 201

Code mapping
module 202

Alarms
on V$_2$

Code
mapping

V$_1$                                                          V$_2$

Delta alarms computing module 203

Impacting changes computing module 204

Delta alarms (newly    and impacting changes
generated + impacted)

Delta alarms postprocessing module 205

Delta alarms classification module 206

Ranking module 207

Alarm grouping module 208

Reporting module 209

System 100

Ranked and grouped delta alarms with
their corresponding code changes

FIG. 2

Receiving input data including a source code ($V_2$), a previous version of the source code ($V_1$), and static analysis results of $V_1$ — 302

Generating a set of static analysis alarms on the source code $V_2$, by performing a source code analysis — 304

Constructing code mapping between $V_2$ and $V_1$, using a code mapping technique — 306

Computing a set of delta alarms from amongst the static analysis alarms using a delta alarms identification technique — 308

Classifying the delta alarms by classifying newly generated alarms and impacted alarms that form the set of delta alarms — 310

Ranking the delta alarms by prioritizing the classes of the delta alarms — 312

Reporting the delta alarms — 314

FIG. 3

300

Identifying one or more lines and tokens deleted from $V_1$ ⟵ 402

Identifying one or more lines and tokens added to $V_2$ ⟵ 404

Identifying one or more lines and tokens that remain unchanged in $V_2$ in comparison with $V_1$ and creating mapping of the unchanged lines and tokens in $V_1$ to corresponding lines and tokens in $V_2$ ⟵ 406

Identifying one or more lines and tokens that are changed in $V_2$ in comparison with $V_1$ and creating mapping of the changed lines and tokens in $V_1$ to corresponding lines and tokens in $V_2$ ⟵ 408

400

FIG. 4

```
┌─────────────────────────────────────────────┐
│            Newly generated alarms            │
└─────────────────────────────────────────────┘
```

| POI-added alarm | POI-changed alarm | Result-changed alarm |

FIG. 5A

```
┌─────────────────────────────────────────────┐
│               Impacted alarms                │
└─────────────────────────────────────────────┘
```

| Data-dependency impacted alarms | Value-dependency impacted alarms | Control-dependency impacted alarms |

FIG. 5B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3144816 A
- US 20160182558 A